# EUROPEAN PATENT APPLICATION

(11) **EP 4 697 232 A1**
(43) Date of publication of application: **18.02.2026**
(21) Application number: 24802712.0
(22) Date of filing: 16.04.2024
(51) Int. Cl.: G06K 17/00, G06K 7/10, G06K 19/07, G06K 19/077

(54) **RADIO FREQUENCY IDENTIFICATION SYSTEM AND METHOD, MAIN CONTROL TAG, CONTROLLED TAG AND READER**

(30) Priority: 10.05.2023 CN 202310524622; 12.07.2023 CN 202310859111; 13.10.2023 CN 202311333429
(71) Applicant: Huawei Technologies Co., Ltd., Shenzhen, Guangdong 518129 (CN)
(72) Inventor: WANG, Liangwei, Shenzhen, Guangdong 518129 (CN); WANG, Sunjie, Shenzhen, Guangdong 518129 (CN); ZHONG, Rong, Shenzhen, Guangdong 518129 (CN); WANG, Zengwei, Shenzhen, Guangdong 518129 (CN); XIONG, Haoyu, Shenzhen, Guangdong 518129 (CN)
(74) Representative: Körber, Martin Hans
(86) International application number: PCT/CN2024/088050
(87) International publication number: WO 2024/230426

(57) **Abstract**

Embodiments of this application provide a radio frequency identification system and method, a controlling tag, a controlled tag, and a reader, to alleviate problems such as a heavy workload and proneness to errors when a large quantity of connection relationships are identified. The radio frequency identification system includes a reader, a controlling tag, and a controlled tag. The reader is configured to send a pairing instruction, where the pairing instruction includes an identifier of the controlling tag. The controlling tag is configured to output, in response to the pairing instruction, a first control signal to the controlled tag in a communication connection. The reader is further configured to broadcast a read instruction. The controlled tag is configured to: when the controlled tag is in a working state, send, to the reader in response to the read instruction, an identifier of the controlled tag and information indicating that the first control signal has been obtained. The reader is further configured to determine a corresponding connection relationship between the controlled tag and the controlling tag based on the identifier of the controlling tag, the identifier of the controlled tag, and the information indicating that the first control signal has been obtained.

## Description

This application claims priority to Chinese Patent Application No. 202310524622.3, filed with the China National Intellectual Property Administration on May 10, 2023 and entitled "RADIO FREQUENCY IDENTIFICATION SYSTEM AND METHOD, CONTROLLING TAG, CONTROLLED TAG, AND READER", to Chinese Patent Application No. 202310859111.7, filed with the China National Intellectual Property Administration on July 12, 2023 and entitled "RADIO FREQUENCY IDENTIFICATION SYSTEM AND METHOD, CONTROLLING TAG, CONTROLLED TAG, AND READER", and to Chinese Patent Application No. 202311333429.8, filed with the China National Intellectual Property Administration on October 13, 2023 and entitled "RADIO FREQUENCY IDENTIFICATION SYSTEM AND METHOD, CONTROLLING TAG, CONTROLLED TAG, AND READER", all of which are incorporated herein by reference in their entireties.

### TECHNICAL FIELD

This application relates to the field of radio frequency identification technologies, and in particular, to a radio frequency identification system and method, a controlling tag, a controlled tag, and a reader.

### BACKGROUND

An optical fiber is a passive transmission medium. Based on a connection between an optical fiber and a port of an optical switch device, it is difficult to manage a dumb resource of an optical cable network through an information network. Consequently, it is difficult to perform digital management. Currently, a common method is to manually identify and record a connection relationship between an optical fiber and a port of an optical switch device. However, in each optical switch device, there are usually dozens of or even hundreds of ports. The manual identification and recording manner is inefficient and is prone to omission. When a large quantity of connection relationships are recorded, a workload is heavy and errors are prone to occur.

To avoid a case, for example, a manual identification error or omission, radio frequency identification tags may be disposed on the optical fiber and the port, and pairwise reading of tag information of the optical fiber and the port is performed by using a reader, to determine a correspondence between the optical fiber and the port. However, in this case, when a large quantity of connection relationships are processed, manual pairwise reading still needs to be performed. This also leads to problems such as a heavy workload and proneness to errors.

### SUMMARY

Embodiments of this application provide a radio frequency identification system and method, a controlling tag, a controlled tag, and a reader, to alleviate problems such as a heavy workload and proneness to errors when a large quantity of connection relationships are identified.

According to a first aspect, a radio frequency identification system is provided. The radio frequency identification system includes a reader, a controlling tag, and a controlled tag. The controlling tag is in a communication connection to the controlled tag. The reader is configured to broadcast a pairing instruction, where the pairing instruction includes an identifier of the controlling tag. The controlling tag is configured to output, in response to matching between an identifier of the controlling tag and the identifier in the pairing instruction, a first control signal to the controlled tag that is in the communication connection to the controlling tag. The reader is further configured to broadcast a read instruction. The controlled tag is configured to send, to the reader in response to the read instruction, an identifier of the controlled tag and information indicating that the controlled tag has obtained the first control signal. The reader is further configured to determine a corresponding connection relationship between the controlled tag and the controlling tag based on the identifier of the controlling tag, the identifier of the controlled tag, and the information indicating that the controlled tag has obtained the first control signal.

In the radio frequency identification system provided in this embodiment of this application, the controlling tag is connected to the controlled tag, and the controlling tag may send, in response to the pairing instruction, the first control signal to the controlled tag connected to the controlling tag. In this case, when the reader identifies the controlled tag connected to the controlling tag, because none of other controlled tags obtains the first control signal, and only the controlled tag connected to the controlling tag obtains the first control signal, the reader may determine, based on the identifier of the controlled tag and the information indicating that the controlled tag has obtained the first control signal, the controlled tag connected to the controlling tag. In this way, pairing of the controlling tag can be completed without manual identification and recording, and identification and pairing efficiency can be improved. When a large quantity of corresponding connection relationships between controlling tags and controlled tags are identified, only a pairing instruction including identifiers of different controlling tags needs to be sent, to improve a degree of automation of the identification. Compared with a manner, for example, manual identification and recording or pairwise identification and recording of the reader, a workload can be reduced and efficiency and identification accuracy can be improved when the radio frequency identification system provided in this embodiment of this application identifies the controlling tag and the controlled tag.

In a possible implementation, the controlling tag includes a first tag chip, a first antenna, and a first connector; the first tag chip includes a first antenna end and a first signal end, the first antenna end is connected to the first antenna, the first signal end is connected to the first connector, and the first connector is configured to connect to the controlled tag; and the first tag chip is configured to output the first control signal through the first signal end in response to the matching between the identifier of the controlling tag and the identifier in the pairing instruction.

In a possible implementation, the controlled tag is configured to obtain the first control signal.

In a possible implementation, the controlled tag includes a second tag chip, a second antenna, and a second connector; the second tag chip includes a second antenna end and a second signal end, the second antenna end is connected to the second antenna, the second signal end is connected to the second connector, and the second connector is configured to connect to the controlling tag; the second tag chip is configured to obtain the first control signal through the second signal end; and the second tag chip is further configured to send, to the reader through the second antenna in response to the read instruction received by the second antenna, the identifier of the controlled tag and the information indicating that the controlled tag has obtained the first control signal.

In a possible implementation, the controlled tag includes a second tag chip, a second antenna, a switch circuit, and a second connector; the second tag chip includes a second antenna end, a second signal end, and a ground end, the second antenna end is connected to the second antenna, the switch circuit includes a first end, a second end, and a control end, the first end of the switch circuit is connected to the second signal end, the second end of the switch circuit is connected to the ground end, the control end of the switch circuit is connected to the second connector, and the second connector is configured to connect to the controlling tag; the switch circuit is configured to be conducted in response to a signal of the control end being the first control signal; the second tag chip is configured to detect conduction of the switch circuit through the first signal end; and the second tag chip is further configured to send, to the reader through the second antenna in response to the read instruction received by the second antenna, the identifier of the controlled tag and the information indicating that the controlled tag has obtained the first control signal.

In a possible implementation, the controlled tag further includes a delay circuit, the delay circuit is connected to the second connector of the controlled tag, and the delay circuit is configured to prolong duration of the first control signal.

In a possible implementation, the controlling tag further includes a delay circuit, the delay circuit is connected to the first connector of the controlling tag, and the delay circuit is configured to prolong duration of the first control signal.

According to a second aspect, a radio frequency identification method is provided. The method includes: A reader sends a pairing instruction in a broadcast manner, where the pairing instruction includes an identifier of a controlling tag; the controlling tag outputs, in response to matching between an identifier of the controlling tag and the identifier in the pairing instruction, a first control signal to a controlled tag connected to the controlling tag; the reader broadcasts a read instruction; the controlled tag sends, to the reader in response to the read instruction, an identifier of the controlled tag and information indicating that the controlled tag has obtained the first control signal; and the reader determines a corresponding connection relationship between the controlled tag and the controlling tag based on the identifier of the controlling tag, the identifier of the controlled tag, and the information indicating that the controlled tag has obtained the first control signal.

In a possible implementation, before that the controlled tag sends, to the reader in response to the read instruction, the identifier of the controlled tag and the information indicating that the controlled tag has obtained the first control signal, the method further includes: The controlled tag obtains the first control signal.

In a possible implementation, that the controlled tag obtains the first control signal includes: A tag chip of the controlled tag detects the first control signal; or when a switch circuit of the controlled tag receives the first control signal, the switch circuit of the controlled tag is conducted, and a tag chip of the controlled tag detects that the switch circuit is conducted.

According to a third aspect, a controlling tag is provided. The controlling tag includes a first tag chip, a first antenna, and a first connector; the first tag chip includes a first antenna end and a first signal end, the first antenna end is connected to the first antenna, the first signal end is connected to the first connector, and the first connector is configured to connect to a controlled tag; the first tag chip is configured to output a first control signal through the first signal end in response to matching between an identifier of the controlling tag and an identifier in a pairing instruction; and the first tag chip is further configured to stop, in response to mismatching between the identifier of the controlling tag and the identifier in the pairing instruction, outputting the first control signal.

In a possible implementation, the controlling tag further includes a delay circuit, the delay circuit is connected to the first connector, and the delay circuit is configured to prolong duration of the first control signal.

According to a fourth aspect, a controlled tag is provided. The controlled tag includes a second tag chip, a second antenna, and a second connector; the second tag chip includes a second antenna end and a second signal end, the second antenna end is connected to the second antenna, the second signal end is connected to the second connector, and the second connector is configured to connect to a controlling tag; and the second tag chip is configured to send, to a reader through the second antenna in response to a read instruction received by the second antenna, an identifier of the controlled tag and information indicating that the controlled tag has obtained a first control signal.

In a possible implementation, the controlled tag is configured to obtain the first control signal.

In a possible implementation, the second tag chip is configured to obtain the first control signal through the second signal end.

In a possible implementation, the controlled tag further includes a switch circuit, the switch circuit includes a first end, a second end, and a control end, the first end of the switch circuit is connected to the second signal end, the second end of the switch circuit is connected to a ground end, and the control end of the switch circuit is connected to the second connector; the switch circuit is configured to be conducted in response to a signal of the control end being the first control signal; and the second tag chip is configured to detect conduction of the switch circuit through the second signal end.

In a possible implementation, the controlled tag further includes a delay circuit, the delay circuit is connected to the second connector of the controlled tag, and the delay circuit is configured to prolong duration of the first control signal.

According to a fifth aspect, a reader is provided. The reader is in a communication connection to a controlling tag and a controlled tag; the reader is configured to broadcast a pairing instruction, where the pairing instruction includes an identifier of the controlling tag; the reader is further configured to broadcast a read instruction; the reader is further configured to receive an identifier of the controlled tag and information indicating that the controlled tag has obtained the first control signal that are sent by the controlled tag in response to the read instruction; and the reader is further configured to determine a corresponding connection relationship between the controlled tag and the controlling tag based on the identifier of the controlling tag, the identifier of the controlled tag, and the information indicating that the controlled tag has obtained the first control signal.

According to a sixth aspect, an embodiment of this application provides a radio frequency identification system, including a reader, a controlling tag, and a controlled tag. The controlling tag is electrically connected to the controlled tag; the reader is configured to broadcast a pairing instruction, where the pairing instruction includes an identifier of a target controlling tag; the target controlling tag is configured to output, in response to the pairing instruction, a first control signal to a controlled tag connected to the target controlling tag; the controlled tag is configured to switch from a dormant state to a working state in response to the first control signal; the reader is further configured to broadcast a read instruction; the controlled tag is configured to send an identifier of the controlled tag to the reader in response to the read instruction when the controlled tag is in the working state; and the reader is further configured to determine a corresponding connection relationship between the controlled tag and the target controlling tag based on the identifier of the target controlling tag and the received identifier of the controlled tag.

In the radio frequency identification system provided in this embodiment of this application, the controlling tag is connected to the controlled tag, and the controlling tag may configure, in response to the pairing instruction, the controlled tag connected to the controlling tag to be in the working state. In this case, when the reader identifies the controlled tag connected to the target controlling tag, because other controlled tags are all in the dormant state, and only the controlled tag connected to the target controlling tag is configured, in response to the first control signal output by the target controlling tag, to be in the working state, the reader reads only the controlled tag connected to the target controlling tag. In this way, pairing of the target controlling tag can be completed without manual identification and recording, and identification and pairing efficiency can be improved. When a large quantity of corresponding connection relationships between controlling tags and controlled tags are identified, only a pairing instruction including identifiers of different controlling tags needs to be sent, to improve a degree of automation of the identification. Compared with a manner, for example, manual identification and recording or pairwise identification and recording of the reader, a workload can be reduced and efficiency and identification accuracy can be improved when the radio frequency identification system provided in this embodiment of this application identifies the controlling tag and the controlled tag.

In a possible implementation, the controlling tag includes a first tag chip, a first antenna, and a first connector; the first tag chip includes a first antenna end and an output end, the first antenna end is connected to the first antenna, the output end is connected to the first connector, and the first connector is configured to connect to the controlled tag; and the first tag chip is configured to output the first control signal through the output end in response to matching between an identifier of the controlling tag and the identifier in the pairing instruction.

The controlling tag may be connected to the controlled tag through the first connector. In response to the pairing instruction, the controlling tag may output the first control signal when the identifier of the controlling tag matches a first identifier in the pairing instruction, and configure the controlled tag connected to the controlling tag to be in the working state. An identifier of another controlling tag does not match the first identifier. Therefore, the controlling tag does not output the first control signal, and the controlled tag connected to the controlling tag is in the dormant state. This means that only the controlled tag connected to the target controlling tag is in the working state. The reader may read the identifier of the controlled tag, to determine the corresponding connection relationship between the target controlling tag and the controlled tag.

In a possible implementation, the controlled tag includes a second tag chip, a second antenna, a switch circuit, and a second connector; the second tag chip includes a second antenna end, the switch circuit includes a first end, a second end, and a control end, the first end of the switch circuit is connected to the second antenna end, the second end of the switch circuit is connected to the second antenna, the control end of the switch circuit is connected to the second connector, and the second connector is connected to the first connector of the controlling tag; the switch circuit is configured to: be conducted in response to a signal of the control end being the first control signal, conduct the second antenna end and the second antenna, and configure the controlled tag to be in the working state; and the second tag chip is configured to send the identifier of the controlled tag to the reader through the second antenna in response to the read instruction when the controlled tag is in the working state.

The second connector of the controlled tag is connected to the first connector of the controlling tag. The switch circuit is connected in series between the second tag chip and the second antenna of the controlled tag. The switch circuit may be conducted or blocked in response to a signal output by the controlling tag. When the controlling tag outputs the first control signal, the switch circuit is conducted, the second tag chip and the second antenna are conducted, the controlled tag is configured to be in the working state and can respond to the read instruction of the reader, another controlled tag is in the dormant state and does not respond to the read instruction of the reader, and the controlled tag may switch to the working state in response to control of the controlling tag, so that the controlled tag connected to the controlling tag can be accurately identified.

In a possible implementation, the controlled tag includes a second tag chip, a second antenna, a switch circuit, a matching resistor, and a second connector; the second tag chip includes a second antenna end, and the switch circuit includes a first end, a second end, and a control end; the second antenna end is connected to the second antenna, the first end of the switch circuit is connected to the second antenna, the second end of the switch circuit is connected to the matching resistor, the control end of the switch circuit is connected to the second connector, and the second connector is connected to the first connector of the controlling tag; the switch circuit is configured to be disconnected in response to a signal of the control end being the first control signal, and configure the controlled tag to be in the working state; and the second tag chip is configured to send the identifier of the controlled tag to the reader through the second antenna in response to the read instruction when the controlled tag is in the working state.

The second connector of the controlled tag is connected to the first connector of the controlling tag, the second antenna end of the second tag chip is connected to the second antenna, the first end of the switch circuit is connected to the second antenna, and the second end is connected to the matching resistor. The switch circuit may be conducted or blocked in response to the signal output by the controlling tag. When the controlling tag outputs the first control signal, the switch circuit is blocked, the second antenna is not grounded, the controlled tag is configured to be in the working state and can respond to the read instruction of the reader, another controlled tag is in the dormant state and does not respond to the read instruction of the reader, and the controlled tag may switch to the working state in response to control of the controlling tag, so that the controlled tag connected to the controlling tag can be accurately identified. When the controlling tag stops outputting the first control signal, the switch circuit is conducted, the second antenna is connected to the matching resistor, which is equivalent to grounding, and the controlled tag is configured to be in the dormant state and does not respond to the read instruction of the reader. In a possible implementation, duration in which the controlling tag outputs the first control signal to the controlled tag is first preset duration; the reader is further configured to send the read instruction in a broadcast manner within second preset duration after sending the pairing instruction, to obtain the identifier of the controlled tag in the working state; and the second preset duration is less than or equal to the first preset duration.

The duration in which the controlling tag outputs the first control signal to the controlled tag is the first preset duration, that is, duration in which the controlled tag maintains the working state is the first preset duration. Therefore, the reader needs to send the read instruction within the first preset duration. Otherwise, the reader may fail to read the correct identifier of the controlled tag.

In a possible implementation, the controlling tag is further configured to stop, in response to mismatching between the identifier of the controlling tag and the identifier in the pairing instruction, outputting the first control signal to the controlled tag connected to the controlling tag, to enable the controlled tag to switch from the working state to the dormant state.

The controlling tag outputs the first control signal when the identifier of the controlling tag matches the identifier in the pairing instruction, and configures the controlled tag connected to the controlling tag to be in the working state. When the identifier of the controlling tag does not match the identifier in the pairing instruction, the controlling tag stops outputting the first control signal, and configures the controlled tag connected to the controlling tag to be in the dormant state. In this case, a controlled tag that can be read by the reader after the reader broadcasts the read instruction is a controlled tag connected to the target controlling tag, and other controlled tags are all in the dormant state, so that accuracy of identifying the connection relationship between the controlling tag and the controlled tag can be improved.

In a possible implementation, the radio frequency identification system further includes a data processing apparatus. The data processing apparatus is in a communication connection to the reader, and the data processing apparatus is configured to process data transmitted by the reader.

For example, the data processing apparatus may store a controlling tag list, where the controlling tag list includes the controlling tag and the identifier of the controlling tag, and the data processing apparatus may further store and process the corresponding connection relationship that is between the target controlling tag and the controlled tag and that is determined by the reader, for example, perform processing such as deduplication and combination on data.

According to a seventh aspect, an embodiment of this application provides a radio frequency identification method. The method is applied to a radio frequency identification system, the radio frequency identification system includes a reader, a controlling tag, and a controlled tag, the controlling tag is electrically connected to the controlled tag, and the method includes: The reader sends a pairing instruction in a broadcast manner, where the pairing instruction includes an identifier of a target controlling tag; the controlling tag outputs, in response to matching between an identifier of the controlling tag and the identifier in the pairing instruction, a first control signal to the controlled tag connected to the controlling tag; the controlled tag switches from a dormant state to a working state in response to the first control signal; the reader sends a read instruction in a broadcast manner; the controlled tag sends an identifier of the controlled tag to the reader in response to the read instruction when the controlled tag is in the working state; and the reader determines a corresponding connection relationship between the controlled tag and the target controlling tag based on the identifier of the target controlling tag and the received identifier of the controlled tag.

In a possible implementation, the controlling tag includes a first tag chip, a first antenna, and a first connector, the first tag chip includes a first antenna end and an output end, the first antenna end is connected to the first antenna, the output end is connected to the first connector, and the first connector is configured to connect to the controlled tag; and that the target controlling tag outputs, in response to the pairing instruction, the first control signal to the controlled tag connected to the target controlling tag includes: The first tag chip outputs the first control signal through the output end in response to the matching between the identifier of the controlling tag and the identifier in the pairing instruction.

In a possible implementation, the controlled tag includes a second tag chip, a second antenna, a switch circuit, and a second connector; the second tag chip includes a second antenna end, and the switch circuit includes a first end, a second end, and a control end; the first end of the switch circuit is connected to the second antenna end, the second end of the switch circuit is connected to the second antenna, the control end of the switch circuit is connected to the second connector, and the second connector is connected to the first connector of the controlling tag; and that the controlled tag switches from the dormant state to the working state in response to the first control signal includes: The switch circuit is conducted in response to a signal of the control end being the first control signal, to enable the controlled tag to switch from the dormant state to the working state.

In a possible implementation, the controlled tag includes a second tag chip, a second antenna, a switch circuit, and a second connector; the second tag chip includes a second antenna end, and the switch circuit includes a first end, a second end, and a control end; the second antenna end is connected to the second antenna, the first end of the switch circuit is connected to the second antenna, the second end of the switch circuit is connected to a matching resistor, the control end of the switch circuit is connected to the second connector, and the second connector is connected to the first connector of the controlling tag; and that the controlled tag switches from the dormant state to the working state in response to the first control signal includes: The switch circuit is disconnected in response to a signal of the control end being the first control signal, to enable the controlled tag to switch from the dormant state to the working state.

In a possible implementation, that the controlled tag sends the identifier of the controlled tag to the reader in response to the read instruction when the controlled tag is in the working state includes: The second tag chip sends the identifier of the controlled tag to the reader through the second antenna in response to the read instruction when the controlled tag is in the working state.

In a possible implementation, before that the reader sends the pairing instruction in a broadcast manner, the method further includes: The reader obtains a controlling tag list, where the controlling tag list includes at least one controlling tag and an identifier of the controlling tag.

According to an eighth aspect, an embodiment of this application further provides a controlling tag. The controlling tag includes a first tag chip, a first antenna, and a first connector; the first tag chip includes a first antenna end and an output end, the first antenna end is connected to the first antenna, the output end is connected to the first connector, and the first connector is configured to connect to the controlled tag; and the first tag chip is configured to output a first control signal through the output end in response to matching between an identifier of the controlling tag and an identifier in a pairing instruction.

According to a ninth aspect, an embodiment of this application further provides a controlled tag. The controlled tag includes a second tag chip, a second antenna, a switch circuit, and a second connector; the second tag chip includes a second antenna end, and the switch circuit includes a first end, a second end, and a control end; the first end of the switch circuit is connected to the second antenna end, the second end of the switch circuit is connected to the second antenna, the control end of the switch circuit is connected to the second connector, and the second connector is configured to connect to a controlling tag; the switch circuit is configured to be conducted in response to a signal of the control end being a first control signal, and configure the controlled tag to be in a working state; and the second tag chip is configured to send an identifier of the controlled tag to a reader through the second antenna in response to a read instruction when the controlled tag is in the working state.

According to a tenth aspect, an embodiment of this application further provides a controlled tag. The controlled tag includes a second tag chip, a second antenna, a switch circuit, and a second connector; the second tag chip includes a second antenna end, and the switch circuit includes a first end, a second end, and a control end; the second antenna end is connected to the second antenna, the first end of the switch circuit is connected to the second antenna, the second end of the switch circuit is connected to a matching resistor, the control end of the switch circuit is connected to the second connector, and the second connector is connected to a first connector of a controlling tag; the switch circuit is configured to be disconnected in response to a signal of the control end being a first control signal, and configure the controlled tag to be in a working state; and the second tag chip is configured to send an identifier of the controlled tag to a reader through the second antenna in response to a read instruction.

According to an eleventh aspect, an embodiment of this application further provides a reader. The reader is in a communication connection to a controlling tag and a controlled tag; the reader is configured to broadcast a pairing instruction, where the pairing instruction includes an identifier of a target controlling tag; the reader is further configured to broadcast a read instruction; the reader is further configured to receive an identifier of the controlled tag that is sent by the controlled tag in response to the read instruction when the controlled tag is in a working state; and the reader is further configured to determine a corresponding connection relationship between the controlled tag and the target controlling tag based on the identifier of the target controlling tag and the received identifier of the controlled tag.

According to a twelfth aspect, an embodiment of this application further provides a radio frequency identification system. The radio frequency identification system includes a reader and a plurality of tags, and a first tag and a second tag in the plurality of tags are connected; the reader is configured to send a read instruction; the first tag is configured to send a first working identifier to the reader in response to the read instruction, where the first working identifier includes a first identifier and a second identifier, the first identifier is an identifier of the first tag, and the second identifier is an identifier of a tag connected to the first tag; the second tag is configured to send a second working identifier to the reader in response to the read instruction, where the second working identifier includes a third identifier, and the third identifier is an identifier of the second tag; and the reader is configured to determine a corresponding connection relationship between the first tag and the second tag when the second identifier matches the third identifier.

In a possible implementation, the first tag includes a first tag chip, an antenna, and a connector, the first tag chip includes an antenna end and a data end, the antenna end is connected to the antenna, and the data end is connected to the connector; the second tag includes a second tag chip, an antenna, and a connector, the second tag chip includes an antenna end and a data end, the antenna end is connected to the antenna, and the data end is connected to the connector; the connector of the first tag is connected to the connector of the second tag; the first tag is configured to obtain the identifier of the second tag through the data end of the first tag chip; and the second tag is configured to obtain the identifier of the first tag through the data end of the second tag chip.

In a possible implementation, the first tag is further configured to generate the first working identifier based on the identifier of the first tag and the identifier of the second tag; the second working identifier further includes a fourth identifier, and the fourth identifier is an identifier of a tag connected to the second tag; and the second tag is further configured to generate the second working identifier based on the identifier of the second tag and the identifier of the first tag.

In a possible implementation, the first tag includes a first tag chip, an antenna, and a connector, the first tag chip includes an antenna end and a data end, the antenna end is connected to the antenna, and the data end is connected to the connector; the second tag includes a second tag chip, an antenna, and a connector, the second tag chip includes an antenna end and a data end, the antenna end is connected to the antenna, and the data end is connected to the connector; the connector of the first tag is connected to the connector of the second tag; and the first tag is configured to obtain the identifier of the second tag through the data end of the first tag chip.

In a possible implementation, the first tag is further configured to generate the first working identifier based on the identifier of the first tag and the identifier of the second tag; and the second tag is further configured to generate the second working identifier based on the identifier of the second tag.

In a possible implementation, the tag includes a tag chip, an antenna, a first connector, and a second connector, the tag chip includes an antenna end, a first data end, and a second data end, the antenna end is connected to the antenna, the first data end is connected to the first connector, and the second data end is connected to the second connector; the tag chip is configured to send, through the first data end, an identifier of the tag to a tag connected to the first connector; and the tag chip is further configured to obtain, through the second data end, an identifier of a tag connected to the second connector.

In a possible implementation, the plurality of tags further include a third tag, a second connector of the first tag is connected to a first connector of the second tag, and a second connector of the second tag is connected to a first connector of the third tag; the first working identifier includes a first identifier and a second identifier, the first identifier is the identifier of the first tag, and the second identifier is an identifier of a tag connected to a second connector of the first tag; the first tag is further configured to generate the first working identifier based on the identifier of the first tag and the identifier of the second tag; the second working identifier includes a third identifier and a fourth identifier, the third identifier is an identifier of the third tag, and the fourth identifier is an identifier of a tag connected to the second connector of the second tag; and the second tag is further configured to generate the second working identifier based on the identifier of the second tag and the identifier of the third tag.

According to a thirteenth aspect, an embodiment of this application further provides a radio frequency identification method. The radio frequency identification method is applied to the radio frequency identification system provided in any one of the implementations of the twelfth aspect, and the method includes: A reader sends a read instruction; a first tag sends a first working identifier to the reader, where the first working identifier includes a first identifier and a second identifier, the first identifier is an identifier of the first tag, and the second identifier is an identifier of a tag connected to the first tag; a second tag sends a second working identifier to the reader, where the second working identifier includes a third identifier, and the third identifier is an identifier of the second tag; and the reader determines a corresponding connection relationship between the first tag and the second tag when the second identifier matches the third identifier.

According to a fourteenth aspect, an embodiment of this application further provides a tag. The tag includes a tag chip, an antenna, and a connector, the tag chip includes an antenna end and a data end, the antenna end is connected to the antenna, and the data end is connected to the connector; the tag is configured to obtain, through the data end of the tag chip, an identifier of a tag connected to the connector; and the tag is further configured to send a working identifier to a reader in response to a read instruction of the reader, where the working identifier includes an identifier of the tag and the identifier of the tag connected to the connector of the tag.

In a possible implementation, the tag is further configured to send, through the data end of the tag chip, the identifier of the tag to the tag connected to the connector.

According to a fifteenth aspect, an embodiment of this application further provides a tag. The tag includes a tag chip, an antenna, and a connector, the tag chip includes an antenna end and a data end, the antenna end is connected to the antenna, and the data end is connected to the connector; the tag is configured to send, through the data end of the tag chip, an identifier of the tag to a tag connected to the connector; and the tag is further configured to send a working identifier to a reader in response to a read instruction of the reader, where the working identifier includes the identifier of the tag.

According to a sixteenth aspect, an embodiment of this application further provides a tag. The tag includes a tag chip, an antenna, a first connector, and a second connector, the tag chip includes an antenna end, a first data end, and a second data end, the antenna end is connected to the antenna, the first data end is connected to the first connector, and the second data end is connected to the second connector; the tag chip is configured to send, through the first data end, an identifier of the tag to a tag connected to the first connector; the tag chip is further configured to obtain, through the second data end, an identifier of a tag connected to the second connector; and the tag is further configured to send a working identifier to a reader in response to a read instruction of the reader, where the working identifier includes the identifier of the tag and the identifier of the tag connected to the second connector of the tag.

According to a seventeenth aspect, an embodiment of this application further provides a reader. The reader is connected to a plurality of tags, and a first tag and a second tag in the plurality of tags are connected; the reader is configured to send a read instruction; the reader is further configured to receive a first working identifier sent by the first tag, where the first working identifier includes a first identifier and a second identifier, the first identifier is an identifier of the first tag, and the second identifier is an identifier of a tag connected to the first tag; the reader is further configured to receive a second working identifier sent by the second tag, where the second working identifier includes a third identifier, and the third identifier is an identifier of the second tag; and the reader is further configured to determine a corresponding connection relationship between the first tag and the second tag when the second identifier matches the third identifier.

According to an eighteenth aspect, an embodiment of this application further provides an optical distribution frame. The optical distribution frame includes a plurality of optical fiber ports, and the controlling tag provided in any one of the implementations of the third aspect or the eighth aspect or the tag provided in any one of the implementations of the fourteenth aspect and the fifteenth aspect is disposed on the optical fiber port.

### BRIEF DESCRIPTION OF DRAWINGS

FIG. 1 is a diagram of a radio frequency identification system according to an embodiment of this application;
FIG. 2 is a diagram of an optical distribution frame according to an embodiment of this application;
FIG. 3 is a diagram of a radio frequency identification system according to an embodiment of this application;
FIG. 4 is a diagram of a working time sequence of a radio frequency identification system according to an embodiment of this application;
FIG. 5 is a diagram of a controlling tag and a controlled tag according to an embodiment of this application;
FIG. 6 is a diagram of a structure of a controlling tag according to an embodiment of this application;
FIG. 7 is a diagram of a structure of a controlled tag according to an embodiment of this application;
FIG. 8 is a diagram of another controlled tag according to an embodiment of this application;
FIG. 9 is a diagram of another controlled tag according to an embodiment of this application;
FIG. 10 is a diagram of a radio frequency identification system according to an embodiment of this application;
FIG. 11 is a diagram of a working principle of a radio frequency identification system according to an embodiment of this application;
FIG. 12 is a diagram of another radio frequency identification system according to an embodiment of this application;
FIG. 13 is a diagram of another radio frequency identification system according to an embodiment of this application;
FIG. 14 is a diagram of another radio frequency identification system according to an embodiment of this application;
FIG. 15 is a schematic flowchart of a radio frequency identification method according to an embodiment of this application;
FIG. 16 is a schematic flowchart of another radio frequency identification method according to an embodiment of this application;
FIG. 17 is a diagram of another radio frequency identification system according to an embodiment of this application;
FIG. 18 is a diagram of a structure of a tag according to an embodiment of this application;
FIG. 19 is a diagram of a structure of another tag according to an embodiment of this application;
FIG. 20 is a diagram of another radio frequency identification system according to an embodiment of this application;
FIG. 21 is a diagram of a structure of another tag according to an embodiment of this application;
FIG. 22 is a diagram of another radio frequency identification system according to an embodiment of this application;
FIG. 23 is a schematic flowchart of another radio frequency identification method according to an embodiment of this application;
FIG. 24 is a schematic flowchart of another radio frequency identification method according to an embodiment of this application;
FIG. 25 is a diagram of another radio frequency identification system according to an embodiment of this application;
FIG. 26 is a diagram of a working time sequence of a radio frequency identification system according to an embodiment of this application;
FIG. 27 is a diagram of a controlling tag and a controlled tag according to an embodiment of this application;
FIG. 28 is a diagram of a structure of a controlling tag according to an embodiment of this application;
FIG. 29 is a diagram of a structure of a controlled tag according to an embodiment of this application;
FIG. 30 is a diagram of a structure of another controlled tag according to an embodiment of this application;
FIG. 31 is a diagram of a structure of another controlling tag according to an embodiment of this application;
FIG. 32 is a diagram of a structure of another controlled tag according to an embodiment of this application;
FIG. 33 is a flowchart of a radio frequency identification method according to an embodiment of this application; and
FIG. 34 is a diagram of a working procedure of a radio frequency identification system according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity or an execution sequence. The term "coupling" is used to represent an electrical connection, including a direct connection through a wire or a connection end or an indirect connection through another device. Therefore, "coupling" should be considered as a generalized electronic communication connection.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, a transistor may be a metal-oxide-semiconductor field effect transistor (metal-oxide-semiconductor field effect transistor, MOSFET), and transistors are classified into two types: an N (negative)-type transistor and a P (positive)-type transistor. The transistor includes a source (source), a drain (drain), and a gate (gate). Conduction or blocking of the transistor may be controlled by controlling a level input to the gate of the transistor. When the transistor is conducted, the source and the drain are conducted, and a conduction current is generated. In addition, a magnitude of the conduction current generated between the source and the drain varies with a gate level of the transistor. When the transistor is blocked, the source electrode and the drain electrode are not conducted, and no current is generated. In embodiments of this application, the gate of the transistor is also referred to as a control end, the source is referred to as a first end, and the drain is referred to as a second end; or the gate is referred to as a control end, the drain is referred to as a first end, and the source is referred to as a second end. In addition, when a level of the control end is a high level, the N-type transistor is conducted, the first end and the second end are conducted, and a conduction current is generated between the first end and the second end; or when a level of the control end is a low level, the N-type transistor is blocked, the first end and the second end are not conducted, and no current is generated. When a level of the control end is a low level, the P-type transistor is conducted, the first end and the second end are conducted, and a conduction current is generated; or when a level of the control end is a high level, the P-type transistor is blocked, the first end and the second end are not conducted, and no current is generated. For detailed description of embodiments of this application, an example in which a transistor is an N-type transistor is used for description in embodiments of this application, but this is not intended to limit the solutions in this application.

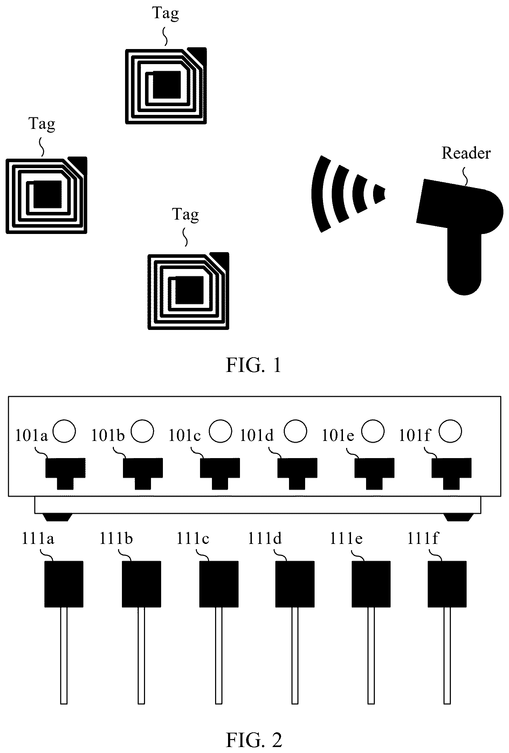

For ease of understanding, concepts and terms that may appear in this application are explained below. FIG. 1 is a diagram of a radio frequency identification system. A radio frequency identification (radio frequency identification, RFID) technology is one of automatic identification technologies, and is to perform contactless bidirectional data communication in a radio frequency manner and read from and write to an RFID tag in the radio frequency manner, to identify a target and exchange data.

The RFID tag is also referred to as a tag, an electronic tag, a smart tag, an RFID transponder, an RFID data carrier, or the like. Usually, the RFID tag includes a coupling element and a chip, and each RFID tag has a unique identifier, for example, an electronic code. In some scenarios, the RFID tag may be attached to an object to identify the object.

A reader is also referred to as a read apparatus, a scanner, a read head, a communicator, a reader/writer (depending on whether the RFID tag can be wirelessly rewritten with data), or the like. The reader is usually configured to read (and sometimes write) RFID tag information. For example, the reader may be a handheld or fixed device.

An optical fiber is a passive transmission medium. Based on a connection between an optical fiber and a port of an optical switch device, it is difficult to monitor and manage a dumb resource of an optical cable network through an information network. For example, an optical distribution frame includes a plurality of ports. Refer to FIG. 2. For example, a port 101a to a port 101f are included, and each of the plurality of ports is correspondingly connected to one optical fiber, for example, an optical fiber 111a to an optical fiber 111f. Because the optical fiber is a passive transmission medium, it is difficult to perform digital management on a connection between a specific port and a specific optical fiber. Currently, a large quantity of complex connection relationships between optical fibers and optical distribution ports are usually manually managed, including attaching a paper tag to each optical fiber port and each port in the optical distribution frame, and then manually identifying, comparing, and registering, in a table or software, a corresponding connection relationship between the optical distribution port and the optical fiber.

This method is not only inefficient, but also prone to errors and omission, causing a loss of a large quantity of connection relationships. This leads to problems such as low provisioning efficiency, a waste of port resources, and difficulty in fault locating. Manual maintenance is difficult. An automatic identification solution is urgently needed to support digitization of optical fiber connection relationships.

One possible method is to install an RFID tag on each of the optical distribution port and an optical fiber connector, keep RFID tags of a pair of an optical distribution port and an optical fiber connector close to each other, and then use an RFID reader to approach the RFID tags, to read and identify the pair of RFID tags. In this case, the RFID reader is in a short-range reading mode, and it is ensured that only a pair of nearest RFID tags is identified, and other surrounding tags are not read. In this way, information about the pair of RFID tags distributed on the optical distribution port and the optical fiber connector can be read, and pairwise identification of RFID tags installed on each group of an optical distribution port and an optical fiber connector can be performed, so that a correspondence between the optical distribution port and the optical fiber in the optical distribution frame can be recorded and managed.

However, in each optical switch device, there are usually dozens of or even hundreds of ports. This pairwise identification method is inefficient and is prone to omission. When a large quantity of connection relationships are recorded, RFID tags on each pair of a port and an optical fiber connector need to be scanned once, leading to a heavy workload and proneness to errors.

To alleviate the foregoing problem, this application provides a radio frequency identification system, to improve efficiency of identifying a corresponding connection relationship or pairing relationship between an optical fiber and an optical distribution port. Alternatively, the system may be applied to any scenario in which a connection relationship of an electrical device, a medical device, a consumer electronic accessory, or the like needs to be managed.

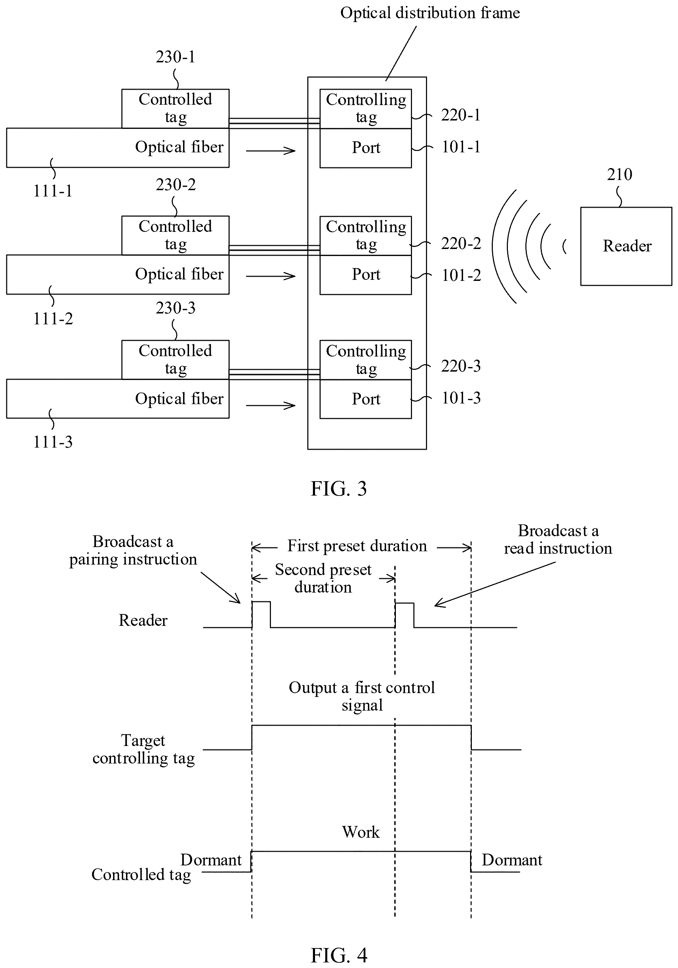

For example, refer to FIG. 3. An embodiment of this application provides a radio frequency identification system. The radio frequency identification system includes a reader 210, a controlling tag 220 (for example, a controlling tag 220-1 to a controlling tag 220-3 shown in FIG. 3), and a controlled tag 230 (for example, a controlled tag 230-1 to a controlled tag 230-3 shown in FIG. 3). The controlling tag 220 is electrically connected to the controlled tag 230. For example, the radio frequency identification system may be used to determine a connection relationship between a port and an optical fiber in an optical distribution frame. For example, the optical distribution frame includes a plurality of ports, and one controlling tag is disposed on each port. For example, the controlling tag 220-1 is disposed on a port 101-1, the controlling tag 220-2 is disposed on a port 101-2, the controlling tag 220-3 is disposed on a port 101-3, and a controlled tag is correspondingly disposed on the optical fiber. When the optical fiber is connected to the port, the controlled tag is connected to the controlling tag. For example, the controlled tag 230-1 is disposed on an optical fiber 111-1, the controlled tag 230-2 is disposed on an optical fiber 111-2, and the controlled tag 230-3 is disposed on an optical fiber 111-3.

The reader 210 is configured to send an instruction to tags (including the controlling tag 220 and the controlled tag 230) to read and write data of the tags.

For example, the reader 210 is configured to broadcast a pairing instruction to the controlling tag, where the pairing instruction includes an identifier of a target controlling tag, and each controlling tag or controlled tag has a unique identifier. For example, the identifier of the controlling tag or the controlled tag may be a unique string of digital codes.

When the reader 210 sends the pairing instruction to the controlling tag 220 in a broadcast manner, the controlling tag 220 that receives the pairing instruction determines whether an identifier of the controlling tag 220 matches the identifier of the target controlling tag in the pairing instruction. If the identifiers match, indicating that the controlling tag 220 is the target controlling tag, the controlling tag 220 responds to the pairing instruction; or if the identifiers do not match, indicating that the controlling tag 220 is not the target controlling tag, the controlling tag 220 does not need to respond to the pairing instruction.

For example, the controlling tag 220 is configured to output, in response to matching between the identifier of the controlling tag 220 and the identifier in the pairing instruction, a first control signal to the controlled tag 230 connected to the controlling tag 220.

The controlled tag 230 receives the first control signal sent by the controlling tag 220 (that is, the target controlling tag), and the controlled tag 230 switches from a dormant state to a working state in response to the first control signal.

When a state of the controlled tag 230 connected to the target controlling tag changes from the dormant state to the working state, in addition to all controlling tags 220, tags in the working state further include the controlled tag 230 connected to the target controlling tag. Before the pairing instruction is sent, only the controlling tag 220 is in the working state. Therefore, an added controlled tag 230 may be distinguished by reading identifiers of all tags in the two states, and a corresponding connection relationship or pairing relationship between the controlled tag 230 and the target controlling tag is determined.

For example, the reader 210 is further configured to send a read instruction in a broadcast manner, where the read instruction is used to obtain identifiers of all the tags in the working state, especially an identifier of the controlled tag 230 connected to the target controlling tag. After receiving the read instruction sent by the reader 210, the controlled tag 230 in the working state sends the identifier of the controlled tag 230 to the reader 210 in response to the read instruction. The controlled tag 230 herein can respond to the read instruction of the reader 210 because the target controlling tag configures the state of the controlled tag connected to the target controlling tag to the working state, and a remaining controlled tag is not configured to be in the working state and is still in the dormant state. Therefore, in this case, tags that respond to the reader 210 include all the controlling tags 220 and the controlled tag connected to the target controlling tag.

The reader 210 is further configured to determine the corresponding connection relationship or pairing relationship between the controlled tag 230 and the target controlling tag based on the identifier of the controlling tag 220 (that is, the target controlling tag) in the pairing instruction and the received identifier of the controlled tag 230. For example, if the pairing instruction includes the identifier of the controlling tag 220, and the identifier of the controlled tag 230 is read after the read instruction is broadcast, the corresponding connection relationship between the controlled tag 230 and the controlling tag 220, which may also be referred to as the pairing relationship between the controlled tag 230 and the controlling tag 220, may be determined.

If the controlling tag 220 is disposed on the port 101, and the controlled tag 230 is disposed on the optical fiber 111, a corresponding connection relationship between the optical fiber 111 and the port 101 may be determined.

The foregoing process is repeated to complete pairing of all the controlling tags.

However, in some possible cases, the target controlling tag may not exist. To avoid a fault, the controlling tag is further configured to respond to the pairing instruction in response to the matching between the identifier of the controlling tag and the identifier in the pairing instruction. After broadcasting the pairing instruction, the reader is configured to: if no response of the target controlling tag is received within preset duration, resend a new pairing instruction, where the pairing instruction includes an identifier of a new target controlling tag, skip the controlling tag from which no response is received, and perform pairing on a next controlling tag.

In addition, in some possible cases, the target controlling tag may exist, but the target controlling tag is not connected to a controlled tag. After broadcasting the read instruction, the reader is further configured to: if no response of the controlled tag is received within preset duration, determine that the target controlling tag is not connected to a controlled tag, and the reader resends a new pairing instruction, where the pairing instruction includes an identifier of a new target controlling tag, skips the controlling tag that is not connected to a controlled tag, and performs pairing on a next controlling tag.

For example, if the controlling tag 220-1 is disposed on the port 101-1, after the reader 210 broadcasts the pairing instruction and the read instruction, if the identifier of the controlled tag is not read, it may be determined that the controlling tag 220-1 is not connected to a controlled tag, and it may also be determined that the port 101-1 is not connected to an optical fiber.

Such steps are repeated until pairing of a last controlling tag is completed, so that the pairing of all the controlling tags may be completed. That is, all optical distribution ports 101 and optical fibers 111 connected to the optical distribution ports 101 are connected and paired.

In some other implementations, the reader 210 may record the identifier of each controlling tag 220 and time of sending the pairing instruction to the controlling tag 220, read and identify the identifier of the controlled tag 230 and identification time, and determine the corresponding connection relationship between the controlling tag 220 and the controlled tag 230. For example, if in a T1 identification periodicity, the reader 210 sends a pairing instruction including an identifier A1 of the controlling tag 220-1, and identifies an identifier B1 of the controlled tag 230-1, the reader 210 may determine a corresponding connection relationship between the controlling tag 220-1 and the controlled tag 230-1. If in a T2 identification periodicity, the reader 210 sends a pairing instruction including an identifier A2 of the controlling tag 220-2, and if the reader 210 reads no identifier of any controlled tag in the T2 identification periodicity, the reader 210 may determine that the controlling tag 220-2 is not connected to a controlled tag.

In addition, in a process of repeatedly performing pairing on different controlling tags, if a controlled tag connected to a 1^{st} controlling tag is still in the working state when pairing is performed on a 2^{nd} controlling tag, the reader may read identifiers of a plurality of controlled tags. If the controlling tag and the controlled tag are in one-to-one correspondence, reading a plurality of controlled tags when pairing is performed on the target controlling tag may affect pairing efficiency. If the controlling tag and the controlled tag may be in one-to-many correspondence, a controlled tag that is not closed in a previous pairing process may affect correctness of a subsequent pairing result.

For example, the controlled tag 230 provided in this embodiment of this application is in the working state when the controlling tag 220 continuously outputs the first control signal. The controlled tag 230 switches to the dormant state when the controlling tag 220 stops outputting the first control signal. In this way, when pairing is performed on the second controlling tag 220, the controlled tag 230 connected to the 1^{st} controlling tag is already in the dormant state, and when the reader 210 broadcasts the read instruction, only the controlled tag 230 connected to the controlling tag responds to the read instruction of the reader 210, to facilitate searching for a controlled tag corresponding to the 2^{nd} controlling tag and improve identification efficiency.

For example, refer to FIG. 4. If duration in which the target controlling tag outputs the first control signal to the controlled tag 230 is first preset duration, that is, starting from time when the reader 210 broadcasts the pairing instruction (where signal transfer time and data processing time of a chip are ignored), the controlled tag 230 connected to the target controlling tag is in the working state within the first preset duration, and after the first preset duration, the controlled tag 230 changes to the dormant state. The reader 210 is further configured to send the read instruction in a broadcast manner within second preset duration after sending the pairing instruction, to obtain the identifier of the controlled tag 230 in the working state, where the second preset duration is less than or equal to the first preset duration.

Alternatively, the controlling tag 220 is further configured to stop, in response to mismatching between the identifier of the controlling tag 220 and the identifier in the pairing instruction, outputting the first control signal to the controlled tag 230 connected to the controlling tag 220, to enable the controlled tag to switch from the working state to the dormant state. As mentioned in the foregoing example, the target controlling tag outputs the first control signal in response to the pairing instruction. For all the controlling tags, when the identifier of the controlling tag matches the identifier in the pairing instruction, the controlling tag is the target controlling tag, and the target controlling tag outputs the first control signal to the controlled tag. When the identifier of the controlling tag does not match the identifier in the pairing instruction, the controlling tag is not the target controlling tag, and outputting the first control signal is stopped, to ensure that only the target controlling tag outputs the first control signal. In this way, a case in which a plurality of controlled tags are in the working state, and identification efficiency is affected can be avoided. For example, in the T1 identification periodicity, the reader sends the pairing instruction including the identifier A1 of the controlling tag 220-1, where the controlling tag 220-1 is the target controlling tag, the controlling tag 220-1 outputs the first control signal, the controlled tag 230-1 switches to the working state, and the reader 210 broadcasts the read instruction to read the identifier B1 of the controlled tag 230-1, to determine the corresponding connection relationship between the controlling tag 220-1 and the controlled tag 230-1. Then, the reader 210 sends the pairing instruction including the identifier A2 of the controlling tag 220-2, where the controlling tag 220-2 is the target controlling tag, and outputs the first control signal to the controlled tag 230-2 connected to the controlling tag 220-2, and the controlled tag 230-2 switches to the working state. The identifier in the pairing instruction is the identifier A2 of the controlling tag 210-2, and the identifier A1 of the controlling tag 210-1 does not match the identifier A2 in the pairing instruction. Therefore, the controlling tag 220-1 is no longer the target controlling tag, the controlling tag 220-1 no longer outputs the first control signal to the controlled tag 230-1 connected to the controlling tag 220-1, and the controlled tag 230-1 switches to the dormant state. In this case, the reader 210 broadcasts the read instruction to read an identifier of the controlled tag 230-2, and may determine a corresponding connection relationship between the controlling tag 220-2 and the controlled tag 230-2.

Alternatively, because the controlling tag and the controlled tag provided in embodiments of this application are both passive tags, in a possible implementation, after the controlling tag 220 configures the controlled tag 230 to be in the working state, because the controlled tag 230 is the passive tag, energy of the controlled tag 230 dissipates after specific duration (for example, the first preset duration), and the controlled tag 230 automatically enters the dormant state.

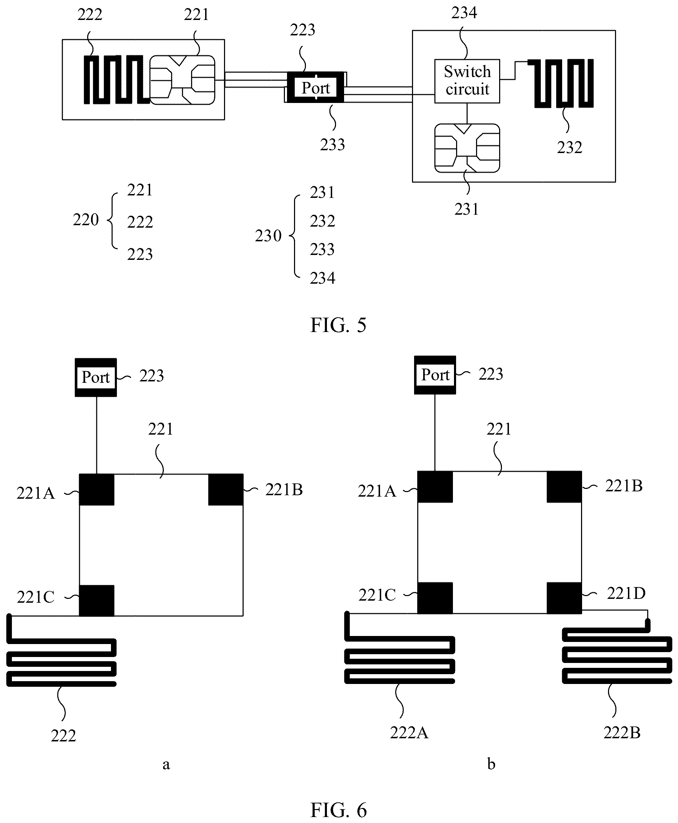

The following briefly describes structures of the controlling tag 220 and the controlled tag 230 provided in embodiments of this application with reference to examples. Refer to FIG. 5. The controlling tag 220 includes a first tag chip 221, a first antenna 222, and a first connector 223. The first tag chip 221 includes a first antenna end and an output end, the first antenna end is connected to the first antenna 222, the output end is connected to the first connector 223, and the first connector 223 is configured to connect to the controlled tag 230. The identifier of the controlling tag 220 matches the identifier in the pairing instruction, that is, when the controlling tag 220 is the target controlling tag, the first tag chip 221 outputs the first control signal through the output end in response to the pairing instruction.

The controlled tag 230 includes a second tag chip 231, a second antenna 232, a switch circuit 234, and a second connector 233. The second tag chip 231 includes a second antenna end. The switch circuit 234 includes a first end, a second end, and a control end. The first end of the switch circuit 234 is connected to the second antenna end, the second end of the switch circuit 234 is connected to the second antenna 232, the control end of the switch circuit 234 is connected to the second connector 233, and the second connector 233 is connected to the first connector 223 of the controlling tag 220. The second tag chip 231 is configured to send the identifier of the controlled tag 230 to the reader 210 through the second antenna 232 in response to the read instruction when the controlled tag chip 230 is in the working state.

The first connector 223 of the controlling tag 220 is connected to the second connector 233 of the controlled tag 230. The controlling tag 220 may send a control signal to the controlled tag 230 through the first connector 223, to configure the controlled tag 230 to be in the working state or the dormant state. When the controlled tag 230 is configured to be in the working state, the controlled tag 230 may respond to a message or an instruction of the reader 210. When the controlled tag 230 is configured to be in the dormant state, the controlled tag 230 does not respond to a message or an instruction of the reader 210.

For example, the reader 210 sends the pairing instruction in a broadcast manner, where the pairing instruction includes the identifier of the target controlling tag. All the controlling tags 220 can receive the pairing instruction that is sent by the reader 210 in a broadcast manner, and compare the identifier in the pairing instruction with identifiers of the controlling tags 220. When the identifier of the controlling tag 220 matches the identifier in the pairing instruction, the controlling tag is determined as the target controlling tag, and may respond to the pairing instruction; otherwise, the controlling tag may not respond to the pairing instruction.

In a possible implementation, a manner in which the target controlling tag responds to the pairing instruction may include: sending a first message to the reader 210, where the first message indicates that the target controlling tag receives the pairing instruction.

The first tag chip 221 is configured to output the first control signal through the output end in response to the pairing instruction, where the first control signal is transmitted to the control end of the switch circuit 234 of the controlled tag 230 through the output end of the first tag chip 221, the first connector 223, and the second connector 233, to configure the controlled tag 230 to be in the working state.

When the controlled tag 230 is configured to be in the working state, the reader 210 broadcasts the read instruction and reads the identifiers of all the controlling tags (including the identifier of the target controlling tag) and the identifier of the controlled tag 230 in the working state. The controlled tag 230 herein can respond to the read instruction of the reader 210 because the target controlling tag configures a state of a controlled tag 230 connected to the target controlling tag to the working state in response to the pairing instruction, the controlled tag 230 connected to the target controlling tag may send an identifier of the controlled tag 230 to the reader 210, and a remaining controlled tag 230 is not configured to be in the working state and is still in the dormant state. Therefore, in this case, tags that respond to the read instruction of the reader 210 include all the controlling tags 220 and the controlled tag 230 connected to the target controlling tag.

The reader 210 reads the identifier of the controlled tag 230, determines a corresponding connection relationship between the controlled tag 230 and the target controlling tag based on the identifier of the target controlling tag in the sent pairing instruction and the received identifier of the controlled tag, and configures, as a pair, the target controlling tag and the controlled tag 230 that responds to the reader 210. If there are a plurality of controlling tags 220 and a plurality of controlled tags 230, the foregoing steps are repeated to complete pairing of all the controlling tags 220.

FIG. 6 is a diagram of a structure of the controlling tag 220. The first tag chip 221 includes an output end 221A, a ground end 221B, and a first antenna end 221C. In a possible implementation, as shown in diagram a in FIG. 6, the first tag chip 221 may be connected to one first antenna 222. For example, the first antenna end 221C is connected to the first antenna 222. In another possible implementation, as shown in diagram b in FIG. 6, the first tag chip 221 may alternatively be connected to two first antennas. Correspondingly, the first tag chip 221 includes two first antenna ends, which are respectively denoted as a first antenna end 221C and a first antenna end 221D. The first antenna end 221C is connected to a first antenna 222A, and the first antenna end 221D is connected to a first antenna 222B. The output end 221A of the first tag chip 221 is connected to the first connector 223, and the first connector 223 is configured to connect to the second connector 233 of the controlled tag 230. When the identifier of the controlling tag 220 matches the identifier included in the pairing instruction, the first tag chip 221 of the controlling tag 220 may output the first control signal through the output end 221A in response to the pairing instruction sent by the reader 210. For example, the first control signal may be a high level signal, the first control signal is transmitted to the controlled tag 230 through the first connector 223 and the second connector 233, and the controlled tag 230 may be configured to be in the working state.

Based on a read command in an RFID protocol, a format of the pairing instruction broadcast by the reader 210 may be shown in Table 1 below, where an RN field is the identifier of the target controlling tag.

**Table 1**

| Frame header | Command code | Storage area | Address | Length | RN16 | CRC16 |
|---|---|---|---|---|---|---|
| 0 | 11000010 | 00 | 00000100 | 00000001 | RN16 | CRC16 |

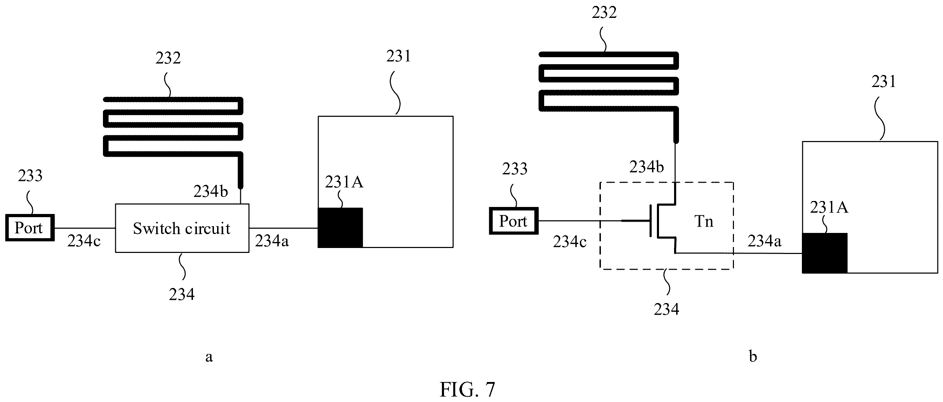

In a possible implementation, with reference to diagram a in FIG. 7, the controlled tag 230 includes a second tag chip 231, a second antenna 232, a switch circuit 234, and a second connector 233; and the second tag chip 231 includes a second antenna end 231A, and the switch circuit 234 includes a first end 234a, a second end 234b, and a control end 234c. The first end 234a of the switch circuit 234 is connected to the second antenna end 231A, the second end 234b of the switch circuit 234 is connected to the second antenna 232, the control end 234c of the switch circuit 234 is connected to the second connector 233, and the second connector 233 is connected to the first connector 223 of the controlling tag 220. The second tag chip 231 is configured to send the identifier of the controlled tag 230 to the reader 210 through the second antenna 232 in response to the read instruction, and the switch circuit 234 is configured to conduct the first end 234a and the second end 234b in response to a signal of the control end 234c being the first control signal, and block the first end 234a and the second end 234b of the switch circuit 234 in other cases.

In the foregoing example, the switch circuit 234 of the controlled tag 230 is connected in series between the second antenna end 231A and the second antenna 232 of the second tag chip 231. The switch circuit 234 conducts the first end 234a and the second end 234b, and conducts the second antenna end 231A of the second tag chip 231 and the second antenna 232 in response to the signal of the control end 234c being the first control signal, and the controlled tag 230 is configured to be in the working state. The controlled tag 230 in the working state may receive and respond to the instruction of the reader 210 through the second antenna 232. For example, when receiving the read instruction of the reader 210, the controlled tag 230 sends the identifier of the controlled tag 230 to the reader 210.

On the contrary, when the controlling tag 220 stops outputting the first control signal, the first end 234a and the second end 234b of the switch circuit 234 are disconnected, the second antenna end 231A of the second tag chip 231 and the second antenna 232 are not conducted, and the controlled tag 230 is configured to be in the dormant state, and cannot receive or respond to the instruction of the reader 210 through the second antenna 232.

For example, the switch circuit 234 may include a transistor. For example, refer to diagram b in FIG. 7. The switch circuit 234 may include an NMOS transistor Tn, a gate of the NMOS transistor Tn may be used as the control end 234c of the switch circuit 234, a first electrode of the NMOS transistor Tn is used as the first end 234a of the switch circuit 234, and a second electrode of the NMOS transistor Tn is used as the second end 234b of the switch circuit 234. When the controlling tag 220 outputs the first control signal (where for example, the first control signal has a high level), the NMOS transistor Tn is conducted, the second antenna end 231A of the second tag chip 231 and the second antenna 232 are conducted, and the controlled tag 230 is configured to be in the working state. When the controlling tag 220 stops outputting the first control signal, the NMOS transistor Tn is cut off, the second antenna end 231A of the second tag chip 231 is disconnected from the second antenna 232, and the controlled tag 230 is configured to be in the dormant state.

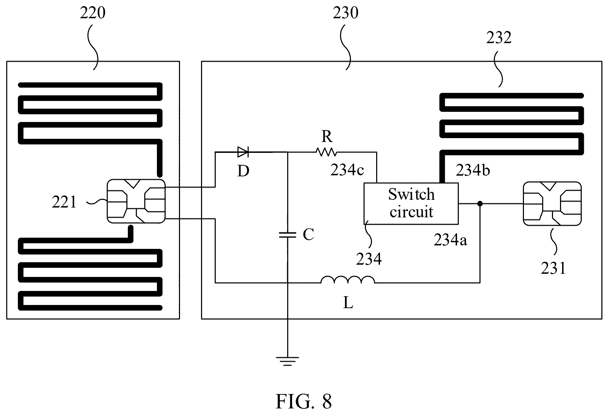

In addition, in a possible implementation, with reference to FIG. 8, a protection circuit is further disposed in the controlled tag, and the protection circuit includes a diode D, a capacitor C, a voltage divider resistor R, and an inductor L. It should be noted that, the first connector of the controlling tag 220 and the second connector of the controlled tag 230 are not marked in FIG. 8.

The diode D and the voltage divider resistor R are connected in series between the second connector and the control end 234c of the switch circuit 234. An anode of the diode D is connected to the second connector, a cathode of the diode D is connected to one end of the voltage divider resistor R, and the other end of the voltage divider resistor R is connected to the control end 234c of the switch circuit 234. A first plate of the capacitor C is connected to the cathode of the diode D, and a second plate of the capacitor C is grounded. One end of the inductor L is connected to the first end 234a of the switch circuit 234, that is, connected to the second antenna end of the second tag chip 231.

The diode D is configured to perform circuit protection to prevent reverse signal flow, the voltage divider resistor R is configured to perform voltage division on the first control signal output by the controlling tag, and the capacitor C is configured to perform energy accumulation. For example, the first control signal output by the controlling tag may be used to charge the capacitor C, and when charges are accumulated to a specific extent, the switch circuit may be controlled to be conducted. The inductor L is configured to prevent the second tag chip of the controlled tag from connecting to an antenna circuit of the controlling tag, and prevent energy of the first antenna of the controlling tag from being transmitted to the controlled tag through a connection line.

Only one second antenna is disposed on the controlled tag, and therefore one switch circuit and one protection circuit are disposed. In some other possible implementations, two antennas may alternatively be disposed on the controlled tag. In this case, a switch circuit and a protection circuit may be correspondingly disposed for each of the two second antennas, provided that the switch circuit can disconnect the second tag chip from the antenna, to cause the controlled tag to fail to respond to the read instruction of the reader.

In addition, in the foregoing example, the protection circuit is disposed on the controlled tag. In some other possible implementations, the protection circuit may alternatively be disposed on the controlling tag.

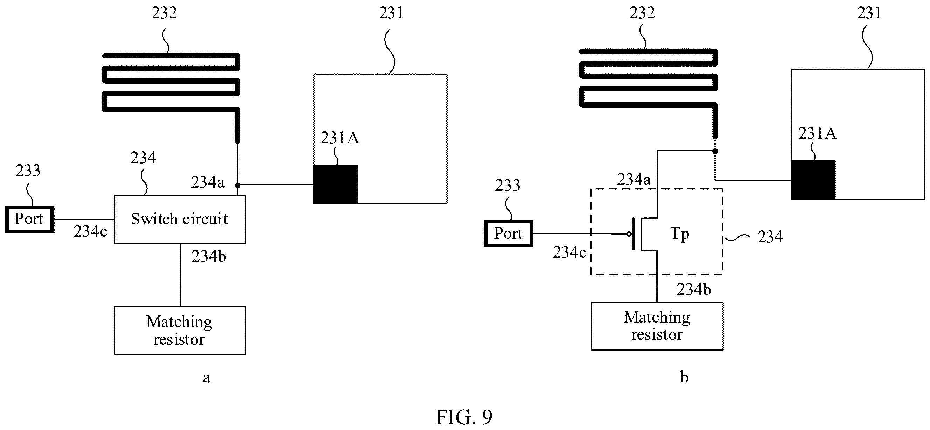

In the foregoing example, the switch circuit 234 of the controlled tag 230 is connected in series between the second antenna 232 and the second antenna end 231A of the second tag chip 231. FIG. 9 shows another possible implementation. For example, refer to diagram a in FIG. 9. The controlled tag 230 includes a second tag chip 231, a second antenna 232, a switch circuit 234, a matching resistor, and a second connector 233. The second tag chip 231 includes a second antenna end 231A, and the switch circuit 234 includes a first end 234a, a second end 234b, and a control end 234c. The second antenna end 231A of the second tag chip 231 is connected to the second antenna 232, the first end 234a of the switch circuit 234 is connected to the second antenna 232, and the second end 234b of the switch circuit 234 is connected to the matching resistor. For example, impedance of the matching resistor may be system impedance, for example, 50 ohms. The control end 234c of the switch circuit 234 is connected to the second connector 233, the second connector 233 is connected to the first connector of the controlling tag, and the second tag chip 231 is configured to send the identifier of the controlled tag 230 to the reader 210 through the second antenna 232 in response to the read instruction.

Because the second antenna 232 is connected to the matching resistor through the switch circuit 234, when the switch circuit 234 is conducted, the second antenna 232 and the matching resistor are conducted, which is equivalent to grounding the second antenna 232, the controlled tag 230 is configured to be in the dormant state, and the controlled tag 230 cannot respond to the instruction of the reader 210 through the second antenna 232. When the switch circuit 234 is disconnected, the second antenna 232 is disconnected from the matching resistor, the controlled tag 230 is configured to be in the working state, and the controlled tag 230 may respond to the instruction of the reader 210 through the second antenna 232.

For example, the switch circuit 234 is configured to: in response to a signal of the control end 234c being the first control signal, disconnect the first end 234a from the second end 234b, and configure the controlled tag 230 to be in the working state; otherwise, conduct the first end 234a and the second end 234b, and configure the controlled tag 230 to be in the dormant state.

For example, the first control signal output by the controlling tag is a high level signal. Refer to diagram b in FIG. 9. The switch circuit 234 may include a PMOS transistor Tp. A first electrode of the PMOS transistor Tp is connected to the first end 234a of the switch circuit 234, a second electrode of the PMOS transistor Tp is connected to the second end 234b of the switch circuit 234, and a gate of the PMOS transistor is connected to the control end 234c of the switch circuit 234. When the controlling tag 220 outputs a high level signal to the control end 234c of the switch circuit 234 through the first connector 223 and the second connector 233, the PMOS transistor Tp is disconnected, the second antenna 232 is disconnected from the matching resistor, and the controlled tag 230 is configured to be in the working state. When the controlling tag 220 stops outputting the first control signal to the controlled tag 230, the PMOS transistor Tp is conducted, the second antenna 232 and the matching resistor are conducted, and the controlled tag 230 is configured to be in the dormant state.

In some other possible implementations, the first control signal may alternatively be a low level signal. This is not limited in embodiments of this application, provided that the switch circuit may configure the controlled tag 230 to be in the working state in response to the first control signal.

A connection manner between the first connector 223 of the controlling tag 220 and the second connector 233 of the controlled tag 230 is a physical connection. Specific forms and quantities of pins of the first connector 223 and the second connector 233 are not limited in embodiments of this application, and the connection manner includes but not limited to a pin connection, a magnetic connection, and other manners.

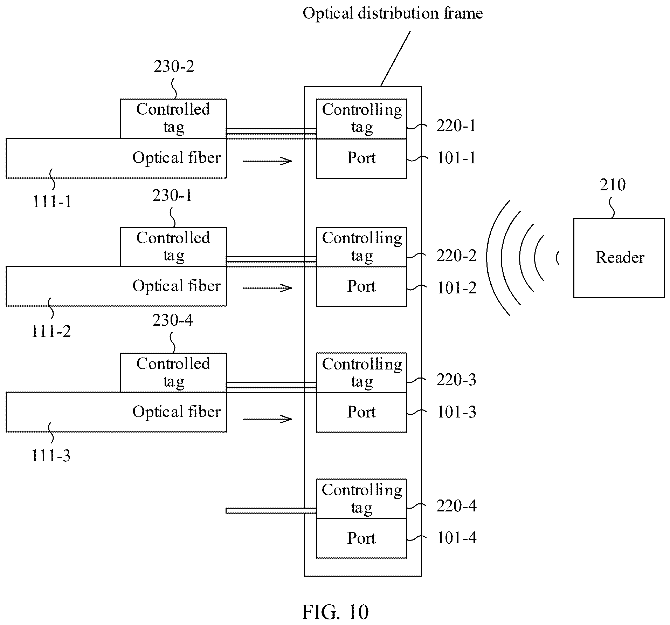

For example, with reference to FIG. 10, an example in which this application is applied to checking a port and an optical fiber in an optical distribution frame is used. The optical distribution frame includes a plurality of ports, and each port is configured to connect to one optical fiber. For ease of management, a controlling tag may be disposed on the port. For example, the controlling tag may be pasted or fastened on the port, and a controlled tag is disposed on the optical fiber. For example, the controlled tag may be pasted or fastened at a corresponding position of the optical fiber. When the optical fiber is connected to the port, the first connector of the controlling tag is connected to the second connector of the controlled tag in a matching manner. Alternatively, in another implementation, the controlling tag may be disposed on the optical fiber, and the controlled tag is disposed on the port. This is not limited in embodiments of this application. In subsequent examples, examples in which the controlling tag is disposed on the port and the controlled tag is disposed on the optical fiber are used for description.

For example, the optical distribution frame includes a plurality of ports, for example, a port 101-1 to a port 101-4. The port 101-1 to the port 101-3 are connected to optical fibers, an optical fiber 111-1 is connected to the port 101-1, an optical fiber 111-2 is connected to the port 101-2, an optical fiber 111-3 is connected to the port 101-3, and the port 101-4 is not connected to an optical fiber. A controlling tag 220-1 is disposed on the port 101-1, a controlling tag 220-2 is disposed on the port 101-2, a controlling tag 220-3 is disposed on the port 101-3, and a controlling tag 220-4 is disposed on the port 101-4. A controlled tag 230-2 is disposed on the optical fiber 111-1, a controlled tag 230-1 is disposed on the optical fiber 111-2, and a controlled tag 230-4 is disposed on the optical fiber 111-3.

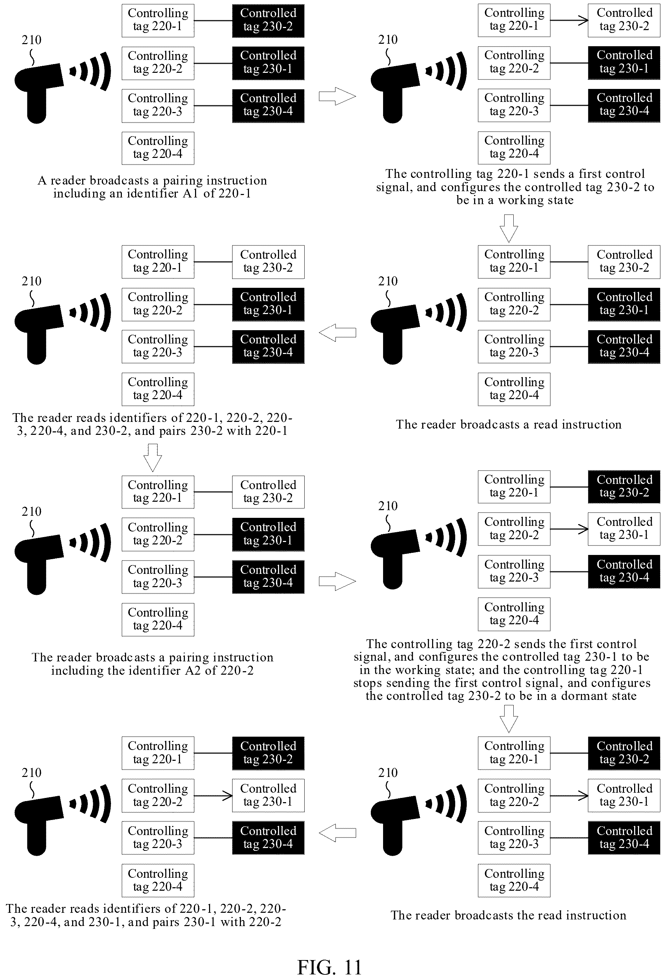

For example, with reference to FIG. 11, if an identifier of the controlling tag 220-1 is A1, a controlled tag 230 corresponding to the controlling tag 220-1 (which may alternatively be any controlling tag) is first identified. The reader 210 sends, in a broadcast manner, a pairing instruction including A1. For example, the target controlling tag is the controlling tag 220-1. After the controlling tag 220-2, the controlling tag 220-3, and the controlling tag 220-4 receive the pairing instruction, because identifiers of the controlling tags do not match A1 in the pairing instruction, the controlling tag 220-2, the controlling tag 220-3, and the controlling tag 220-4 do not respond to the pairing instruction.

After the controlling tag 220-1 receives the pairing instruction, because the identifier A1 in the pairing instruction matches the identifier of the controlling tag 220-1, the controlling tag 220-1 may output, in response to the pairing instruction, the first control signal to the controlled tag 230-2 connected to the controlling tag 220-1.

The controlled tag 230-2 receives the first control signal sent by the controlling tag 220-1, and a switch circuit of the controlled tag 230-2 configures the controlled tag 230-2 to be in the working state.

The reader sends the read instruction in a broadcast manner, and at this time, all the controlling tags and the controlled tag in the working state may respond to the read instruction of the reader. For example, the controlling tag 220-1, the controlling tag 220-2, the controlling tag 220-3, the controlling tag 220-4, and the controlled tag 230-2 in the working state respond to the read instruction, and send identifiers of the tags to the reader, and the reader can read the identifiers of the controlling tag 220-1, the controlling tag 220-2, the controlling tag 220-3, the controlling tag 220-4, and the controlled tag 230-2. In this identification periodicity, the identifier in the pairing instruction is A1, that is, the identifier of the controlling tag 220-1, so that the reader can perform pairing on the controlling tag 220-1 and the controlled tag 230-2, that is, determine that the optical fiber 101-1 is connected to the port 111-1.

Next, the foregoing steps are sequentially repeated. The reader sends, in a broadcast manner, a pairing instruction including an identifier of a target controlling tag. For example, the identifier of the target controlling tag is an identifier A2 of the controlling tag 220-2, that is, the controlling tag 220-2 is the target controlling tag, and the controlling tag 220-2 configures, in response to the pairing instruction, the controlled tag 230-1 connected to the controlling tag 220-2 to be in the working state. In addition, because the controlling tag 220-1 is no longer the target controlling tag, after receiving the pairing instruction in which the identifier of the target controlling tag is A2, the controlling tag 220-1 stops outputting the first control signal, and the controlled tag 230-2 connected to the controlling tag 220-1 is switched to the dormant state, to avoid affecting an identification result in a next identification periodicity.

The reader broadcasts the read instruction, and may identify the controlling tag 220-1, the controlling tag 220-2, the controlling tag 220-3, the controlling tag 220-4, and the controlled tag 230-1. Because the identifier in the pairing instruction is the identifier A2 of the controlling tag 220-2 in this identification periodicity, the reader may perform pairing on the controlling tag 220-2 and the controlled tag 230-1, that is, determine that the optical fiber 111-2 is connected to the port 101-2.

Then, the reader sends, in a broadcast manner, a pairing instruction including an identifier of a target controlling tag. For example, the identifier of the target controlling tag is an identifier A3 of the controlling tag 220-3. The controlling tag 220-1, the controlling tag 220-2, the controlling tag 220-3, the controlling tag 220-4, and the controlled tag 230-4 can be finally identified. Therefore, the reader may perform pairing on the controlling tag 220-3 and the controlled tag 230-4, that is, determine that the optical fiber 111-3 is connected to the port 101-3.

Next, the reader sends, in a broadcast manner, a pairing instruction including an identifier of a target controlling tag. For example, the identifier of the target controlling tag is an identifier A4 of the controlling tag 220-4. The controlling tag 220-1, the controlling tag 220-2, the controlling tag 220-3, and the controlling tag 220-4 can be finally identified. Because the port 101-4 is not connected to an optical fiber, that is, the controlling tag 220-4 is not connected to a controlled tag, after the reader sends, in a broadcast manner, the pairing instruction including the identifier A4 of the controlling tag 220-4, the reader reads the identifiers of all the tags but can only identify the controlling tag 220-1, the controlling tag 220-2, the controlling tag 220-3, and the controlling tag 220-4, and cannot identify the identifier of the controlled tag. In this identification periodicity, the identifier in the pairing instruction is the identifier A4 of the controlling tag 220-4. Therefore, the reader may determine that the controlling tag 220-4 does not have a controlled tag paired with the controlling tag 220-4, that is, determine that the port 101-4 is not connected to an optical fiber.

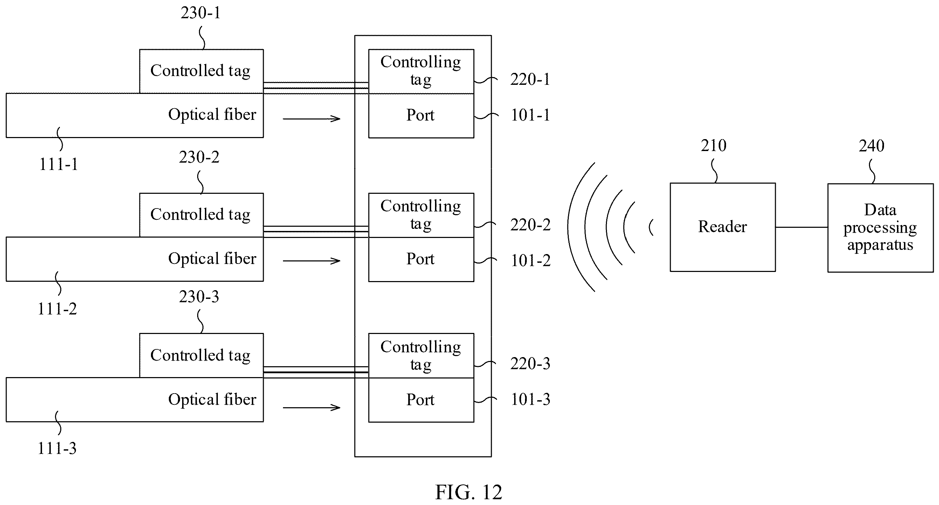

Refer to FIG. 12. In a possible implementation, the radio frequency identification system further includes a data processing apparatus 240. The data processing apparatus 240 may be an intelligent terminal such as a smartphone or a tablet computer, or may be a computer, a background server, or the like. The data processing apparatus 240 may be configured to process data sent by the reader 210.

For example, when there are a large quantity of controlling tags 220 and a large quantity of controlled tags 230, a data capacity for storing corresponding connection relationships between the controlling tags 220 and the controlled tags 230 is large, and the reader 210 may fail to process a large amount of data, so that the data processing apparatus 240 may be used to segment the data.

For example, an example in which this application is applied to identification of a connection relationship between the port and the optical fiber in the optical distribution frame is further used. It is assumed that the reader 210 may store corresponding connection relationships between 50 pairs of controlling tags and controlled tags. If there are more than 50 pairs of optical fibers and ports in the optical distribution frame, the reader 210 may fail to complete pairing of the controlling tag 220 and the controlled tag 230, and the data processing apparatus 240 needs to perform segmentation. For example, the data processing apparatus 240 divides 100 controlling tags 220 into a plurality of groups, the reader 210 determines, through grouping, a mapping relationship between a controlling tag 220 in each group and the controlled tag 230. In some other possible implementations, the data processing apparatus 240 may further perform processing such as combining, deduplication, and removing invalid data on corresponding connection relationship data that is between the controlling tag and the controlled tag and that is sent by the reader 210.

In addition, before identifying the mapping relationship between the controlling tag 220 and the controlled tag 230, the reader 210 may send the read instruction in a broadcast manner to read identifiers of all the tags. Because all the controlled tags 230 are in the dormant state, only all the controlling tags 220 can be identified herein. The reader 210 may store the read identifiers of the controlling tags 220. For example, the reader 210 may store a controlling tag list, where the controlling tag list includes each controlling tag 220 and an identifier corresponding to the controlling tag 220.

In some other possible implementations, the controlling tag list may alternatively be stored in the data processing apparatus 240. In addition to obtaining the controlling tag list by broadcasting the read instruction by the reader 210, the data processing apparatus 240 may further obtain the controlling tag list from a configuration file, through a remote server, through manual recording, or in another manner, so that before starting identification, the reader 210 does not need to read, in a broadcast manner, the identifiers of all the controlling tags 220 to obtain the controlling tag list.

As mentioned in the foregoing example, the data processing apparatus 240 may be an intelligent terminal device such as a mobile phone or a tablet computer, the reader 210 is in a communication connection to the data processing apparatus 240, and the reader 210 may send data to the data processing apparatus 240 for processing, for example, may send the identified corresponding connection relationship data of the controlling tag 220 and the controlled tag 230 to the data processing apparatus 240 for processing and storage. Alternatively, the reader 210 may send the read identifier of the target controlling tag, the read identifier of the controlled tag 230, and the like to the data processing apparatus 240, and the data processing apparatus 240 determines a corresponding connection relationship between the target controlling tag and the controlled tag 230.

The communication connection herein may be a wired connection such as a data line, or may be a wireless connection such as Bluetooth, infrared, or a wireless network.

In another possible implementation, the data processing apparatus 240 may alternatively be a remote server, the reader 210 is in a communication connection to the data processing apparatus 240, and the reader 210 may send data to the data processing apparatus 240 for processing, for example, may send the identified corresponding connection relationship data of the controlling tag 220 and the controlled tag 230 to the data processing apparatus 240 for processing and storage. Alternatively, the reader 210 may send the identifier of the target controlling tag, the read identifier of the controlled tag 230, and the like to the data processing apparatus 240, and the data processing apparatus 240 determines a corresponding connection relationship between the target controlling tag and the controlled tag 230.

In the foregoing example, the radio frequency identification system provided in this application is described by using an example in which the connection relationship between the port and the optical fiber in the optical distribution frame is checked. In this way, one controlling tag corresponds to a maximum of one controlled tag. In some other possible application scenarios, in a manner, one controlling tag may alternatively be connected to a plurality of controlled tags.

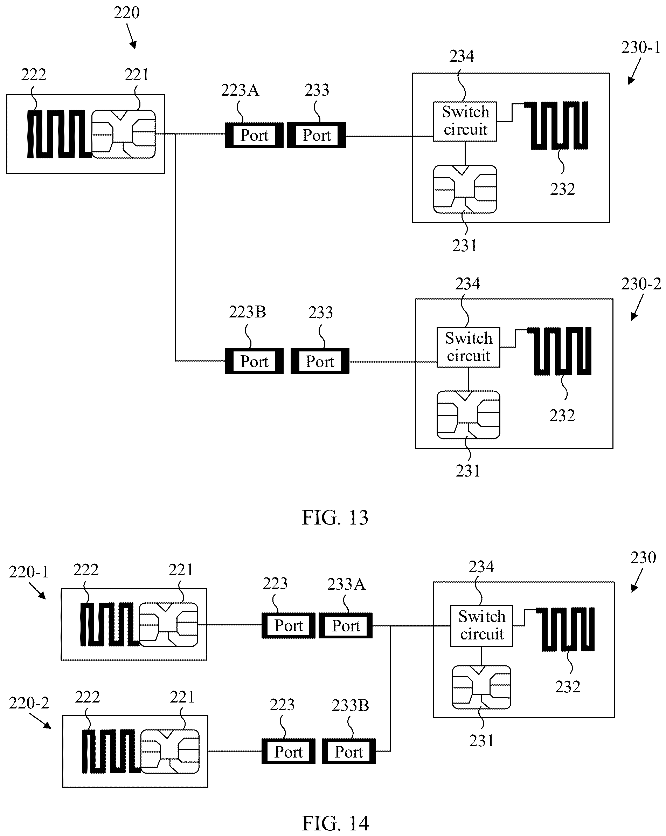

For example, refer to FIG. 13. The controlling tag 220 includes a first tag chip 221, a first antenna 222, and a plurality of first connectors, for example, a first connector 223A and a first connector 223B. An output end of the first tag chip 221 may be connected to the plurality of first connectors, the first connector 223A may be configured to connect to a second connector 233 of the controlled tag 230-1, and the first connector 223B may be configured to connect to a second connector 233 of the controlled tag 230-2. In this way, one controlling tag 220 may be connected to a plurality of controlled tags 230, the controlling tag 220 may configure, in response to the pairing instruction of the reader 210, the plurality of controlled tags 230 to be in the working state, to read identifiers of the plurality of controlled tags 230 in the working state, so as to determine a corresponding connection relationship between the controlling tag 220 and the plurality of controlled tags 230.

For example, for each controlling tag 220 in the controlling tag list, the reader 210 sequentially obtains identifiers of a plurality of controlled tags 230 connected to the controlling tag 220. Specifically, when one controlling tag 220 is connected to two controlled tags 230-1 and 230-2, the reader 210 first sends a pairing instruction including the identifier of the controlling tag 220, and controls the controlled tag 230-1 and the controlled tag 230-2 that are connected to the controlling tag 220 to switch to the working state. The reader 210 delivers the read instruction to read identifiers of all the tags. Because the controlled tag 230-1 and the controlled tag 230-2 are in the working state at this time, the reader 210 can read identifiers of the controlled tag 230-1 and the controlled tag 230-2, and therefore can determine that the controlling tag 220 is connected to both the controlled tag 230-1 and the controlled tag 230-2.

In the foregoing example, an example in which one controlling tag 220 is correspondingly connected to a plurality of controlled tags 230 is used for description. In some other possible implementations, one controlled tag 230 may alternatively correspond to a plurality of controlling tags 220. For example, refer to FIG. 14. The controlled tag 230 includes two second connectors, where one second connector 233A is connected to a first connector 223 of the controlling tag 220-1, and the other second connector 233B is connected to a first connector 223 of the controlling tag 220-2. For each controlling tag in the controlling tag list, the reader 210 sequentially obtains an identifier of a controlled tag connected to the controlling tag. Specifically, if both the controlling tag 220-1 and the controlling tag 220-2 are connected to the controlled tag 230, the reader 210 first sends a pairing instruction including an identifier of the controlling tag 220-1, and the controlling tag 220-1 controls the controlled tag 230 connected to the controlling tag 220-1 to switch to the working state. The reader 210 broadcasts the read instruction to read identifiers of all the tags. At this time, the controlled tag 230 is in the working state. Therefore, the reader 210 may read an identifier of the controlled tag 230, and may determine a corresponding connection relationship between the controlling tag 220-1 and the controlled tag 230. The reader 210 then sends a pairing instruction including the identifier of the controlling tag 220-2. The controlling tag 220-2 controls the controlled tag 230 connected to the controlling tag 220-2 to switch to the working state. The reader 210 broadcasts the read instruction to read the identifiers of all the tags. At this time, the controlled tag 230 is still in the working state. Therefore, the reader 210 may also read the identifier of the controlled tag 230, and determine a corresponding connection relationship between the controlling tag 220-2 and the controlled tag 230, to determine that both the controlling tag 220-1 and the controlling tag 220-2 are connected to the controlled tag 230.

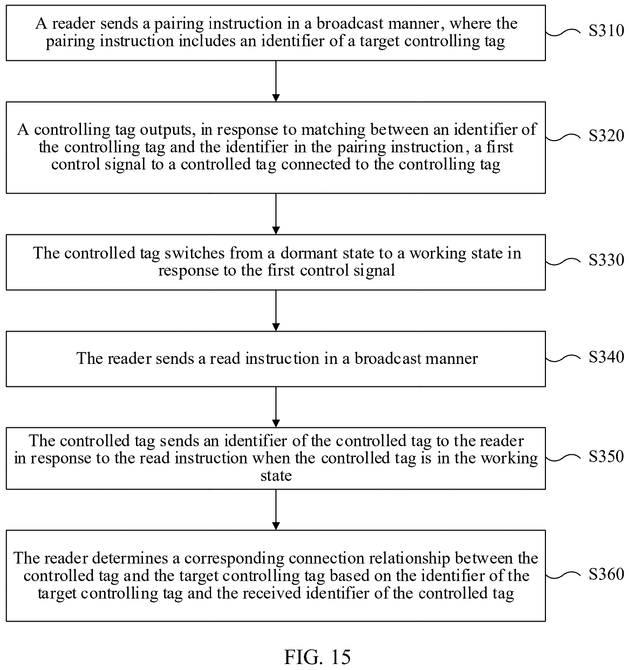

An embodiment of this application further provides a radio frequency identification method. The method is applied to the radio frequency identification system provided in the foregoing examples. The radio frequency identification system includes a data processing system, a reader, a controlling tag, and a controlled tag. The controlling tag is electrically connected to the controlled tag. Refer to FIG. 15. The method includes the following steps.

S310: The reader sends a pairing instruction in a broadcast manner, where the pairing instruction includes an identifier of a target controlling tag.

Each controlling tag or controlled tag has a unique identifier, and the pairing instruction includes the identifier of the target controlling tag. A controlling tag that receives the pairing instruction may compare an identifier of the controlling tag with the identifier in the pairing instruction. If the identifier of the controlling tag matches the identifier included in the pairing instruction, the controlling tag is the target controlling tag, and may respond to the pairing instruction of the reader. If the identifier of the controlling tag does not match the identifier included in the pairing instruction, the controlling tag is not the target controlling tag, and does not need to respond to the pairing instruction broadcast by the reader.

S320: The controlling tag outputs, in response to matching between the identifier of the controlling tag and the identifier in the pairing instruction, a first control signal to the controlled tag connected to the controlling tag.

The controlling tag is connected to the controlled tag. If the identifier of the controlling tag matches the identifier included in the pairing instruction, the controlling tag is the target controlling tag, and the target controlling tag may output, in response to the pairing instruction, the first control signal to a controlled tag connected to the target controlling tag.

In a possible implementation, the controlling tag includes a first tag chip, a first antenna, and a first connector, the first tag chip includes a first antenna end and an output end, the first antenna end is connected to the first antenna, the output end is connected to the first connector, and the first connector is configured to connect to the controlled tag; and that the target controlling tag outputs, in response to the pairing instruction, the first control signal to the controlled tag connected to the target controlling tag includes:
The first tag chip outputs the first control signal through the output end in response to the matching between the identifier of the controlling tag and the identifier in the pairing instruction.

S330: The controlled tag switches from a dormant state to a working state in response to the first control signal.

When the controlling tag outputs the first control signal to the controlled tag connected to the controlling tag, the controlled tag is configured to be in the working state in response to the first control signal; or when the controlling tag stops outputting the first control signal to the controlled tag connected to the controlling tag, the controlled tag is configured to be in the dormant state, the target controlling tag outputs the first control signal in response to the pairing instruction, and the controlled tag connected to the target controlling tag is configured to be in the working state.

In a possible implementation, the controlled tag includes a second tag chip, a second antenna, a switch circuit, and a second connector; the second tag chip includes a second antenna end, and the switch circuit includes a first end, a second end, and a control end; the first end of the switch circuit is connected to the second antenna end, the second end of the switch circuit is connected to the second antenna, the control end of the switch circuit is connected to the second connector, and the second connector is connected to the first connector of the controlling tag; and that the controlled tag switches from the dormant state to the working state in response to the first control signal includes:
The switch circuit is conducted in response to a signal of the control end being the first control signal, to enable the controlled tag to switch from the dormant state to the working state.

In another possible implementation, the controlled tag includes a second tag chip, a second antenna, a switch circuit, and a second connector; the second tag chip includes a second antenna end, and the switch circuit includes a first end, a second end, and a control end; and the second antenna end is connected to the second antenna, the first end of the switch circuit is connected to the second antenna, the second end of the switch circuit is connected to a matching resistor, the control end of the switch circuit is connected to the second connector, and the second connector is connected to the first connector of the controlling tag; and that the controlled tag switches from the dormant state to the working state in response to the first control signal includes:
The switch circuit is disconnected in response to a signal of the control end being the first control signal, to enable the controlled tag to switch from the dormant state to the working state.

S340: The reader sends a read instruction in a broadcast manner.

For example, the reader is further configured to send the read instruction in a broadcast manner, where the read instruction is used to obtain identifiers of all tags in the working state, especially an identifier of the controlled tag connected to the target controlling tag.

S350: The controlled tag sends the identifier of the controlled tag to the reader in response to the read instruction when the controlled tag is in the working state.

After receiving the read instruction sent by the reader, the controlled tag sends the identifier of the controlled tag to the reader in response to the read instruction. The target controlling tag configures a state of the controlled tag connected to the target controlling tag to the working state in response to the pairing instruction, and can respond to the read instruction broadcast by the reader, and a remaining controlled tag is not configured to be in the working state, is still in the dormant state, and cannot respond to the read instruction broadcast by the reader. In this case, tags that respond to the reader include all controlling tags and the controlled tag connected to the target controlling tag.

S360: The reader determines a corresponding connection relationship between the controlled tag and the target controlling tag based on the identifier of the target controlling tag and the received identifier of the controlled tag.

The reader determines the corresponding connection relationship or a corresponding pairing relationship between the controlled tag and the target controlling tag based on the identifier of the target controlling tag in the sent pairing instruction and the received identifier sent by the controlled tag. For example, if the pairing instruction includes an identifier of a controlling tag 220-1, and then an identifier of a controlled tag 230-1 is read, a corresponding connection relationship between the controlled tag 230-1 and the controlling tag 220-1, which may also be referred to as the pairing relationship between the controlled tag 230-1 and the controlling tag 220-1, may be determined.

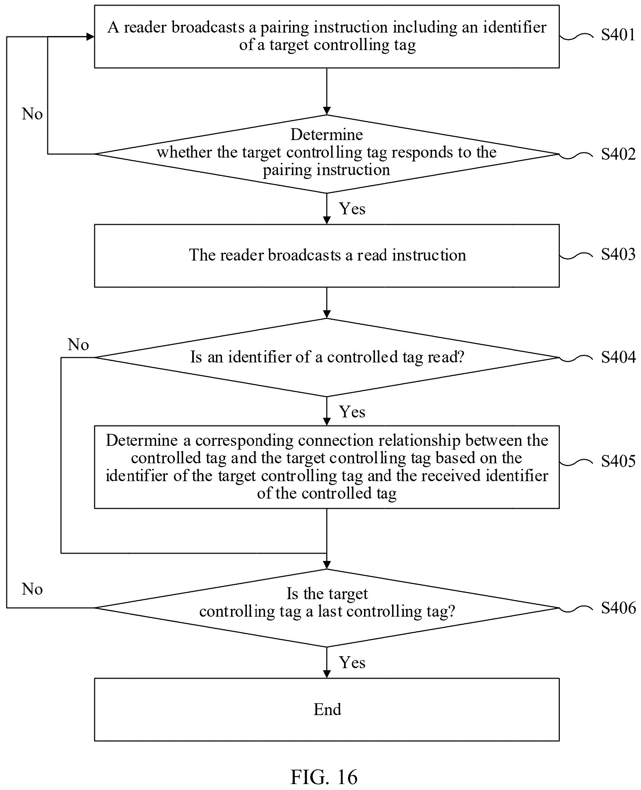

Refer to FIG. 16. An embodiment of this application further provides another radio frequency identification method. The method is applied to a reader in a radio frequency identification system. For example, the method is applied to identification of a connection relationship between a port and an optical fiber in an optical distribution frame. For example, the optical distribution frame includes a plurality of ports, and the plurality of ports are connected to a plurality of optical fibers. A controlling tag is disposed on each port, and a controlled tag is disposed on the optical fiber. When the optical fiber is connected to the port in a matching manner, the controlling tag is electrically connected to the controlled tag. The radio frequency identification method includes the following steps.

S401: Send a pairing instruction including an identifier of a target controlling tag.

A controlling tag is selected from a controlling tag list. For example, a controlling tag 220-x is selected. The pairing instruction including the identifier of the target controlling tag is sent. The target controlling tag may be any tag, for example, may be the controlling tag 220-x.

For example, the controlling tag list may be generated by the reader by broadcasting a read instruction and reading identifiers of all controlling tags, or the controlling tag list may be obtained in advance by loading configuration information, through manual recording, or in another manner.

S402: Determine whether the target controlling tag responds to the pairing instruction.

After the controlling tag 220-x receives the pairing instruction, if an identifier of the controlling tag 220-x matches the identifier in the pairing instruction, the controlling tag 220-x is the target controlling tag, and the target controlling tag may respond to the pairing instruction, for example, send a first message to the reader, where the first message indicates that the target controlling tag receives the pairing instruction.

The target controlling tag outputs, in response to the pairing instruction, a first control signal to a controlled tag 230-y connected to the target controlling tag, and configures the controlled tag 230-y to be in a working state from a dormant state. The controlled tag in the dormant state cannot respond to the read instruction of the reader, and the controlled tag in the working state can respond to the read instruction of the reader.

The reader determines whether a response of the controlling tag 220-x is received. If the controlling tag 220-x responds to the pairing instruction, S403 is performed; or if the controlling tag 220-x does not respond to the pairing instruction, S401 is performed again, to select a new controlling tag as the target controlling tag, for example, select a controlling tag 220-x+1, and send a pairing instruction including an identifier of the controlling tag 220-x+1.

S403: The reader broadcasts the read instruction.

The reader sends the read instruction in a broadcast manner, to read identifiers of all tags, for example, read the identifiers of all the controlling tags, and read an identifier of the controlled tag in the working state.

S404: Determine whether the identifier of the controlled tag is read.

Because the controlling tag 220-x configures, in response to the pairing instruction, the controlled tag 230-y connected to the controlling tag 220-x to be in the working state, and another controlled tag is in the dormant state, if the controlling tag 220-x is connected to a controlled tag, the reader reads an identifier of a controlled tag 230-y, and performs S405; or if the controlling tag 220-x is not connected to a controlled tag, the reader cannot read the identifier of the controlled tag, and performs S406.

S405: Determine a corresponding connection relationship between the controlled tag and the target controlling tag based on the identifier of the target controlling tag and the received identifier of the controlled tag.

The corresponding connection relationship between the controlled tag and the target controlling tag, which may be referred to as pairing the controlled tag with the controlling tag, is determined based on the identifier of the target controlling tag in the sent pairing instruction and a read or received identifier of a second tag in the working state. If an identifier of a controlled tag is read, because the controlled tag is configured to be in the working state in response to the first control signal of the target controlling tag, it may be determined that the controlled tag is correspondingly connected to the target controlling tag.

After the corresponding connection relationship between the controlling tag 220-x and the controlled tag 230-y is determined, S406 is performed.

S406: Determine whether the target controlling tag is a last controlling tag.

If the target controlling tag 220-x is the last controlling tag, it indicates that all other controlling tags have been paired, and corresponding connection relationships of all target controlling tags have been determined; and the procedure ends.

If the target controlling tag 220-x is not the last controlling tag, it indicates that other unpaired controlling tags still exist, and S401 is performed again, to select the unpaired controlling tag as a new target controlling tag, and determine a connection relationship of a controlled tag corresponding to the unpaired controlling tag.

In the foregoing example, in two or more tags that are paired and connected to each other, one tag may configure a working state of another tag, and the tag configured to configure the working state of the another tag is referred to as a controlling tag. The another tag that is configured by the controlling tag to be in the working state is referred to as a controlled tag, and the controlling tag may configure the working state of the controlled tag. In this way, the controlling tag may be used to configure the working state of the controlled tag, and a corresponding connection relationship between the controlling tag and the controlled tag is identified by reading an identifier of the controlled tag in the working state. An embodiment of this application further provides another radio frequency identification system. A working state of each tag does not need to be switched, and only a working identifier needs to be generated for each tag. The working identifier may include an identifier of the tag, and may further include an identifier of a tag connected to the tag, the working identifier is sent to a reader when the reader sends a read instruction, and the reader may determine a corresponding connection relationship between the tags based on the working identifier sent by each tag.

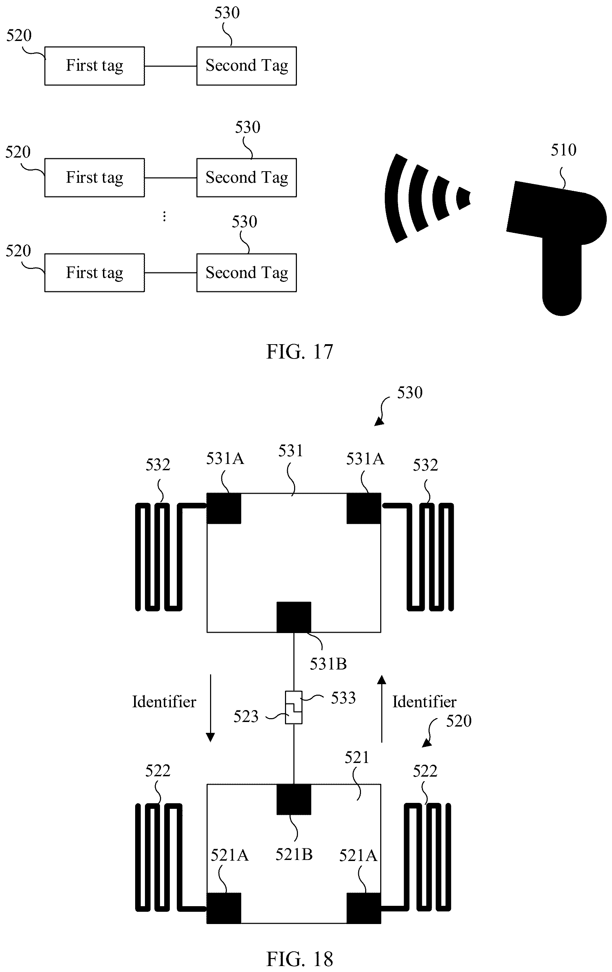

For example, an embodiment of this application further provides a radio frequency identification system. Refer to FIG. 17. The radio frequency identification system includes a reader 510 and a plurality of tags. For example, the plurality of tags include a first tag 520 and a second tag 530. The first tag 520 is electrically connected to the second tag 530.

For example, the radio frequency identification system may be applied to determining of a connection relationship between a port and an optical fiber in an optical distribution frame. For example, the optical distribution frame includes a plurality of ports, and one first tag (or second tag) is disposed on each port. For example, a tag 520 is disposed on the port, and a second tag 530 is correspondingly disposed on the optical fiber. When the optical fiber is connected to the port, the first tag 520 is connected to the second tag 530.

The reader 510 may send a pairing instruction, a read instruction, and the like, and the first tag 520 and the second tag 530 may send working identifiers to the reader 510 in response to the read instruction. For example, the first tag 520 is configured to send a first working identifier to the reader 510 in response to the read instruction. The first working identifier includes a first identifier and a second identifier, the first identifier is an identifier of the first tag 520, and the second identifier is an identifier of a tag connected to the first tag 520. The second tag 530 is configured to send a second working identifier to the reader 510 in response to the read instruction. The second working identifier includes a third identifier, and the third identifier is an identifier of the second tag 530. The reader 510 is configured to determine a corresponding connection relationship between the first tag 520 and the second tag 530 when the second identifier matches the third identifier.

For example, the first working identifier sent by the first tag 520 includes A1B1, where A1 is an identifier of the first tag 520, B1 is an identifier of a tag connected to the first tag 520, and the second working identifier sent by the second tag 530 includes an identifier B1 of the second tag 530. Because B1 in the first working identifier sent by the first tag 520 matches the identifier B1 in the second working identifier sent by the second tag 530, the reader 510 may determine the corresponding connection relationship between the first tag 520 and the second tag 530 based on the first working identifier sent by the first tag 520 and the second working identifier sent by the second tag 530. For example, with reference to the foregoing example, the reader 510 may determine that the first tag 520 with the identifier A1 is correspondingly connected to the second tag 530 with the identifier B1.

Refer to FIG. 18. In a possible implementation, using the first tag 520 as an example, the first tag 520 includes a first tag chip 521, an antenna 522, and a connector 523, and the first tag chip 521 includes an antenna end 521A and a data end 521B. The antenna end 521A of the first tag chip 521 is connected to the antenna 522 of the first tag 520, and the data end 521B of the first tag chip 521 is connected to the connector 523 of the first tag 520.

The second tag 530 includes a second tag chip 531, an antenna 532, and a connector 533. The second tag chip 531 includes an antenna end 531A and a data end 531B. The antenna end 531A of the second tag chip 531 is connected to the antenna 532 of the second tag 530, and the data end 531B of the second tag chip 531 is connected to the connector 533 of the second tag 530.

For example, the connector 523 of the first tag 520 may be connected to the connector 533 of the second tag 530. The first tag 520 may obtain the identifier of the second tag 530 through the connector 523, and generate a working identifier based on the identifier of the first tag 520 and the identifier of the second tag 530. The second tag 530 may also obtain the identifier of the first tag 520 through the connector 533, and generate a working identifier based on the identifier of the second tag 530 and the identifier of the first tag 520. In this case, when the reader 510 sends the read instruction, the first tag 520 may send the working identifier to the reader 510, and the second tag 530 may also send the working identifier to the reader 510. In this way, the reader 510 may determine the corresponding connection relationship between the first tag 520 and the second tag 530 based on the working identifier (the first working identifier) sent by the first tag 520 and the working identifier (the second working identifier) sent by the second tag 530.

For example, for the first tag chip 521 and the second tag chip 531, the data ends of the first tag chip 521 and the second tag chip 531 may be configured to detect connection states and exchange identifiers with tags connected to the first tag chip 521 and the second tag chip 531. For example, the first tag 520 may detect, through the data end 521B of the first tag chip 521, whether the first tag 520 is connected to a second tag 530, and when the first tag 520 is connected to the second tag 530, an identifier of the second tag 530 may be obtained through the data end 521B, and the identifier of the first tag 520 may also be sent to the second tag 530 through the data end 521B. The second tag 530 may also detect, through the data end 531B of the second tag chip 531, whether the second tag 530 is connected to a first tag 520, and when the second tag 530 is connected to the first tag 520, an identifier of the first tag 520 may be obtained through the data end 531B, and the identifier of the second tag 530 may be sent to the first tag 520 through the data end 531B.

In a possible implementation, the first tag 520 detects a connection state of the data end 521B through the first tag chip 521, and determines whether the first tag 520 is connected to a second tag 530. If the first tag 520 is connected to the second tag 530, the first tag 520 requests or reads an identifier of the connected second tag 530 from the second tag 530 through the data end 521B of the first tag chip 521, and stores the obtained identifier of the second tag 530 in a register of the first tag chip 521. The first tag chip 521 generates a working identifier based on the identifier of the first tag 520 and the identifier of the second tag 530. For example, if the identifier of the first tag 520 is A1, and the identifier of the second tag 530 is B1, the working identifier generated by the first tag chip 521 is A1B1.

Correspondingly, the first tag 520 is connected to the second tag 530, and the second tag 530 may also detect a connection state of the data end 531B through the second tag chip 531 to determine whether the second tag 530 is connected to a first tag 520. If the second tag 530 is connected to the first tag 520, the second tag 530 requests or reads an identifier of the connected first tag 520 from the first tag 520 through the second tag chip 531, and stores the obtained identifier of the first tag 520 in a register of the second tag chip 531. The second tag chip 531 generates a working identifier based on the identifier of the second tag 530 and the identifier of the first tag 520. For example, if the identifier of the second tag 530 is B1, and the identifier of the first tag 520 is A1, the working identifier generated by the second tag chip 531 is B1A1.

For example, the identifier A1 of the first tag 520 may be represented as 0xAA??????????, and the identifier B1 of the second tag 530 may be represented as 0xBB??????????, where "?" is a specified value of a specific identifier of the tag, and the value may be any value ranging from 0 to F, and the identifier has 48 bits in total. In this case, the working identifier A1B1 generated by the first tag chip 521 may include two fields. For example, A1B1 may be denoted as: 0xAA??????????BB??????????, where a first field: AA?????????? identifies the identifier A1 of the first tag 520, and a second field: BB?????????? identifies the identifier B1 of the second tag 530. Similarly, the working identifier B1A1 generated by the second tag 530 may also include two fields: 0xBB?????????? and AA??????????, where a first field: BB?????????? represents the identifier B1 of the second tag 530, and a second field: AA?????????? represents the identifier A1 of the first tag 520.

For example, in a possible implementation, the first tag 520 and the second tag 530 may detect connection states after being powered on and started up to work. For example, the first tag 520 detects whether the first tag 520 is connected to a second tag 530, and the second tag 530 detects whether the second tag 530 is connected to a first tag 520. If the first tag 520 is connected to the second tag 530, the first tag 520 obtains an identifier of the second tag 530 and generates a working identifier; and if the second tag 530 is connected to the first tag 520, the second tag 530 obtains an identifier of the first tag 520 and generates a working identifier.

In another possible implementation, the reader 510 may send the pairing instruction, and the first tag 520 and the second tag 530 may detect connection states in response to the pairing instruction sent by the reader 510. For example, the first tag 520 detects whether the first tag 520 is connected to a second tag 530, and the second tag 530 detects whether the second tag 530 is connected to a first tag 520. If the first tag 520 is connected to the second tag 530, the first tag 520 obtains an identifier of the second tag 530 and generates a working identifier; and if the second tag 530 is connected to the first tag 520, the second tag 530 obtains an identifier of the first tag 520 and generates a working identifier.

The reader 510 is further configured to send the read instruction, and the first tag 520 may send the first working identifier generated by the first tag chip 521 to the reader 510 in response to the read instruction, that is, send the identifier of the first tag 520 and the identifier of the second tag 530 to the reader 510. The second tag 530 may send the second working identifier generated by the second tag chip 531 to the reader 510 in response to the read instruction, that is, send the identifier of the second tag 530 and the identifier of the first tag 520 to the reader 510, and the reader 510 can determine a pairing status or a corresponding connection status between the first tag 520 and the second tag 530 based on the identifier of the first tag 520 and the identifier of the second tag 530.

For example, in a possible implementation, after sending the pairing instruction, the reader 510 sends the read instruction, reads a working identifier of each tag, and identifies a corresponding connection relationship of the tag. Herein, a time interval between the read instruction and the pairing instruction needs to ensure that pairing of all tags is completed. For example, the time interval may be set to 1 second.

As mentioned in the foregoing example, the identifier A1 of the first tag 520 may be represented as 0xAA??????????, the identifier B1 of the second tag 530 may be represented as 0xBB??????????, the working identifier A1B1 generated by the first tag chip 521 may be 0xAA??????????BB??????????, and the working identifier B1A1 generated by the second tag chip 531 may be denoted as 0xBB??????????AA??????????.

For example, the reader 510 may determine a corresponding connection relationship of each tag based on the received first working identifier, the received second working identifier, and the like. For example, in a possible implementation, the reader 510 may exchange a first field and a second field of any received working identifier to form a new identifier. For example, the reader 510 exchanges the first field and the second field of the first working identifier: 0xAA??????????BB?????????? sent by the first tag 520 to form a new identifier. For example, the new identifier may be denoted as 0xBB??????????AA??????????. Then, the new identifier is matched with a working identifier sent by another tag, to search for a matching identifier. For example, herein, the newly generated identifier: 0xBB??????????AA?????????? matches 0xBB??????????AA?????????? in the second working identifier sent by the second tag 530, so that the corresponding connection relationship between the first tag 520 and the second tag 530 may be determined.

Alternatively, in another possible implementation, the reader 510 may extract the first field and the second field in the received first working identifier sent by the first tag 520, and extract the first field and the second field in the received second working identifier sent by the second tag 530. If the first field of the first working identifier matches the second field of the second working identifier, and the second field of the first working identifier matches the first field of the second working identifier, the corresponding connection relationship between the first tag 520 and the second tag 530 may be determined.

In addition, the reader 510 may send the pairing instruction and the read instruction for a plurality of times, and perform, for a plurality of times, an operation of identifying a corresponding connection relationship of a tag, to increase a success rate and improve accuracy of identification.

In the foregoing example, the first tag 520 is connected to the second tag 530, and both the first tag 520 and the second tag 530 may respectively obtain an identifier of a tag connected to the first tag 520 and an identifier of a tag connected to the second tag 530, and can send the identifiers of the first tag 520 and the second tag 530 and the identifiers of the connected tags to the reader 510 in response to the read instruction of the reader 510. An embodiment of this application further provides another radio frequency identification system. The radio frequency identification system includes a reader 510, a first tag 520, and a second tag 530. The first tag 520 is electrically connected to the second tag 530. The reader 510 may send a pairing instruction, a read instruction, and the like, and the first tag 520 and the second tag 530 may send working identifiers to the reader 510 in response to the read instruction. The working identifier sent by the first tag 520 may include an identifier of the first tag 520 and an identifier of the second tag 530 connected to the first tag 520. The working identifier sent by the second tag 530 may include the identifier of the second tag 530. The reader 510 may determine a corresponding connection relationship between the first tag 520 and the second tag 530 based on the working identifiers sent by the first tag 520 and the second tag 530. For example, a first working identifier sent by the first tag 520 includes A1B1, and a second working identifier sent by the second tag 530 includes B1, where A1 is the identifier of the first tag 520, and B1 is the identifier of the second tag 530. In this way, the reader 510 may determine the corresponding connection relationship between the first tag 520 and the second tag 530 based on the working identifiers sent by the first tag 520 and the second tag 530. For example, with reference to the foregoing example, the reader 510 may determine that the first tag 520 with the identifier A1 is correspondingly connected to the second tag 530 with the identifier B1.

In the radio frequency identification system provided in this embodiment of this application, for the first tag 520 and the second tag 530 that are connected to each other, the first tag 520 may obtain the identifier of the second tag 530, and the second tag 530 does not need to obtain the identifier of the first tag 520.

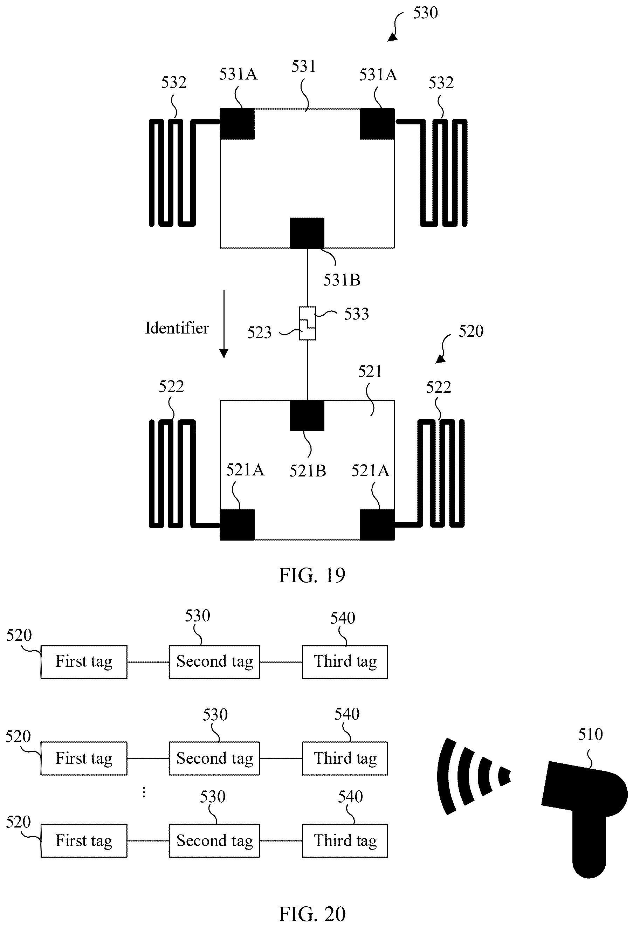

For example, with reference to FIG. 19, using the first tag 520 as an example, the first tag 520 includes a first tag chip 521, an antenna, and a connector, and the first tag chip 521 includes an antenna end and a data end. The antenna end of the first tag chip 521 is connected to the antenna of the first tag 520, and the data end of the first tag chip 521 is connected to a connector 523 of the first tag 520.

The second tag 530 includes a second tag chip 531, an antenna, and a connector. The second tag chip 531 includes an antenna end and a data end. The antenna end of the second tag chip 531 is connected to the antenna of the second tag 530, and the data end of the second tag chip 531 is connected to a connector 533 of the second tag 530.

The connector 523 of the first tag 520 may be connected to the connector 533 of the second tag 530.

For example, the first tag chip 521 may obtain, through the data end 521B, the identifier of the second tag 530 connected to the first tag 520, and generate the first working identifier based on the identifier of the first tag 520 and the identifier of the second tag 530. In this way, when the reader 510 sends the read instruction, the first tag 520 may send the first working identifier to the reader 510 in response to the read instruction.

The data end of the second tag chip 531 may be configured to send the identifier of the second tag 530, and when the first tag 520 sends an obtaining request, the second tag 530 may send the identifier of the second tag 530 to the first tag 520 through the data end of the second tag chip 531. Different from the foregoing example, the data end of the second tag chip 531 does not need to obtain the identifier of the first tag 520, and the second tag chip 531 generates the second working identifier based on the identifier of the second tag 530. In this case, when the reader 510 sends the read instruction, the second tag 530 may send the second working identifier to the reader 510 in response to the read instruction. In this way, the reader 510 may determine the corresponding connection relationship between the first tag 520 and the second tag 530 based on the working identifiers sent by the first tag 520 and the second tag 530.

For example, the identifier A1 of the first tag 520 may be represented as 0xAA??????????, and the identifier B1 of the second tag 530 may be represented as 0xBB??????????, where "?" is a specified value of a specific identifier of the tag, and the value may be any value ranging from 0 to F, and the identifier has 48 bits in total. In this case, the first working identifier generated by the first tag chip 521 may include two fields. For example, the first working identifier may be denoted as 0xAA??????????BB??????????, where a first field: AA?????????? represents the identifier A1 of the first tag 520, and a second field: BB?????????? represents the identifier B1 of the second tag 530. Similarly, the second working identifier generated by the second tag 530 may also include two fields: 0xBB?????????? and 0000000000, where a first field: BB?????????? represents the identifier B1 of the second tag 530, and a second field: 0000000000 is empty.

After the reader 510 sends the read instruction, the first tag 520 may send the first working identifier generated by the first tag chip 521 to the reader 510, and the second tag 530 may send the second working identifier generated by the second tag chip 531 to the reader 510.

The reader 510 determines the corresponding connection relationship between the first tag 520 and the second tag 530 based on the first working identifier and the second working identifier. For example, the reader 510 may search, based on the second field of the first working identifier, for a first field of a second working identifier that matches the second field, and if the two fields match, may determine a corresponding connection relationship between the first tag 520 that sends the first working identifier and a second tag 530 that sends the second working identifier.

For example, the first working identifier sent by the first tag 520 includes: 0xAA??????????BB??????????, and the second field represents the identifier B1 of the second tag 530. The second working identifier sent by the second tag 530 includes 0xBB??????????0000000000, and the first field represents the identifier B1 of the second tag 530. If the second field of the first working identifier matches the first field of the second working identifier, the corresponding connection relationship between the first tag 520 and the second tag 530 may be determined.

For example, in a possible implementation, the first tag 520 and the second tag 530 may detect connection states after being powered on and started up to work. For example, the first tag 520 detects whether the first tag 520 is connected to a second tag 530, and if the first tag 520 is connected to the second tag 530, the first tag 520 obtains an identifier of the second tag 530 to generate a working identifier. The second tag 530 may send the identifier of the second tag 530 to the first tag 520 in response to a request of the first tag 520, and the second tag 530 may further generate a working identifier based on the identifier of the second tag 530.

In another possible implementation, the reader 510 may send the pairing instruction, and the first tag 520 and the second tag 530 may detect connection states in response to the pairing instruction sent by the reader 510. For example, the first tag 520 detects whether the first tag 520 is connected to a second tag 530, the second tag 530 detects whether the second tag 530 is connected to a first tag 520. If the first tag 520 is connected to the second tag 530, the first tag 520 obtains an identifier of the second tag 530 and generates a working identifier. The second tag 530 may send the identifier of the second tag 530 to the first tag 520 in response to a request of the first tag 520, and the second tag 530 may further generate a working identifier based on the identifier of the second tag 530.

The reader 510 is further configured to send the read instruction, and the first tag 520 may send the first working identifier generated by the first tag chip 521 to the reader 510 in response to the read instruction, that is, send the identifier of the first tag 520 and the identifier of the second tag 530 to the reader 510. The second tag 530 may send the second working identifier generated by the second tag chip 531 to the reader 510 in response to the read instruction, that is, send the identifier of the second tag 530 to the reader 510. The reader 510 can determine, based on the first working identifier sent by the first tag 520 and the second working identifier sent by the second tag 530, a pairing status or a corresponding connection status between the first tag 520 and the second tag 530.

For example, the first working identifier sent by the first tag 520 includes a first field and a second field. The first field includes the identifier of the first tag 520, and the second field includes the identifier of the second tag 530 connected to the first tag 520. The second working identifier sent by the second tag 530 includes a first field and a second field. The first field includes the identifier of the second tag 530, and the second field is empty. The reader 510 is configured to determine the corresponding connection relationship between the first tag 520 and the second tag 530 when the second field of the first working identifier sent by the first tag 520 matches the first field of the second working identifier sent by the second tag 530.

For example, in a possible implementation, after sending the pairing instruction, the reader 510 sends the read instruction, reads a working identifier of each tag, and identifies a corresponding connection relationship of the tag. Herein, a time interval between the read instruction and the pairing instruction needs to ensure that pairing of all tags is completed. For example, the time interval may be set to 1 second.

In addition, the reader 510 may send the pairing instruction and the read instruction for a plurality of times, and perform, for a plurality of times, an operation of identifying a corresponding connection relationship of a tag, to increase a success rate and improve accuracy of identification.

In the foregoing example, tags are connected in pairs. For example, the first tag 520 and the second tag 530 are configured as a pair. In another possible implementation, a case in which a plurality of tags are connected in series may further exist. For example, three or more tags are connected in series. In this case, an embodiment of this application provides another radio frequency identification system. Refer to FIG. 20. The radio frequency identification system includes a reader 510 and a plurality of tags, for example, including a first tag 520, a second tag 530, and a third tag 540. The first tag 520, the second tag 530, and the third tag 540 are sequentially connected in series. For example, the first tag 520 is electrically connected to the second tag 530, and the second tag 530 is electrically connected to the third tag 540. The reader 510 may send a pairing instruction, a read instruction, and the like, and the first tag 520, the second tag 530, and the third tag 540 may send working identifiers to the reader 510 in response to the read instruction. A first working identifier sent by the first tag 520 may include an identifier of the first tag 520 and an identifier of the second tag 530 connected to the first tag 520. A second working identifier sent by the second tag 530 may include the identifier of the second tag 530 and an identifier of the third tag 540 connected to the second tag 530. A third working identifier sent by the third tag 540 may include the identifier of the third tag 540. The reader 510 may determine corresponding connection relationships between the first tag 520, the second tag 530, and the third tag 540 based on the working identifiers sent by the first tag 520, the second tag 530, and the third tag 540. For example, the first working identifier sent by the first tag 520 includes A1B 1, the second working identifier sent by the second tag 530 includes B1C1, and the third working identifier sent by the third tag 540 includes C1. A1 is the identifier of the first tag 520, B1 is the identifier of the second tag 530, and C1 is the identifier of the third tag 540. In this way, the reader 510 may determine the corresponding connection relationships between the first tag 520, the second tag 530, and the third tag 540 based on the first working identifier sent by the first tag 520, the second working identifier sent by the second tag 530, and the third working identifier sent by the third tag 540. For example, herein, the reader 510 may determine that the first tag 520 with the identifier A1 is correspondingly connected to the second tag 530 with the identifier B1, and the second tag 530 with the identifier B1 is correspondingly connected to the third tag 540 with the identifier C1, that is, the first tag 520, the second tag 530, and the third tag 540 are connected in series.

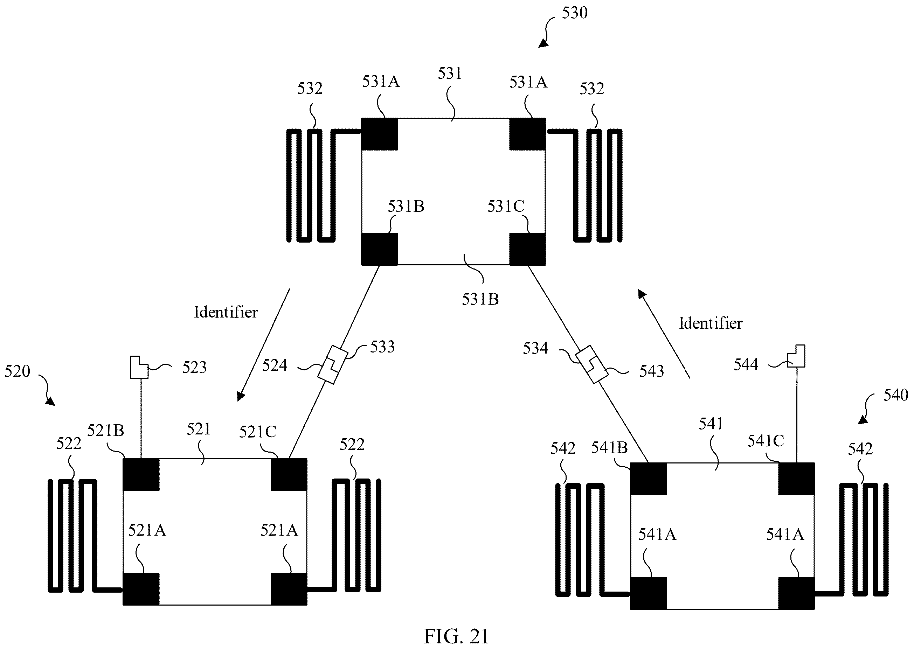

With reference to FIG. 21, the first tag 520 is used as an example. The first tag 520 includes a tag chip 521, an antenna 522, a first connector 523, and a second connector 524. The tag chip 521 includes an antenna end 521A, a first data end 521B, and a second data end 521C. The antenna end 521A is connected to the antenna 522, the first data end 521B is connected to the first connector 523, and the second data end 521C is connected to the second connector 524. The first data end 521B is configured to send, through the first connector 523, the identifier of the first tag 520 to the tag connected to the first connector 523. The second data end 521C is configured to read, through the second connector 524, the identifier of the tag connected to the second connector 524.

Structures of the second tag 530 and the third tag 540 are the same as a structure of the first tag 520. For example, the second connector 524 of the first tag 520 is connected to a first connector 533 of the second tag 530; and a second connector 534 of the second tag 530 is connected to a first connector 543 of the third tag 540.

In this case, the second connector 524 of the first tag 520 is connected to the first connector 533 of the second tag 530, that is, the second data end 521C of the chip of the first tag 520 is connected to a first data end 531B of a chip of the second tag 530. Therefore, the first tag 520 requests or reads the identifier of the second tag 530 from the connected second tag 530 through the second data end 521C of the chip 521 of the first tag 520, and stores the obtained identifier of the second tag 530 in a register of the chip 521 of the first tag 520, and the chip 521 of the first tag 520 generates the first working identifier based on the identifier of the first tag 520 and the identifier of the second tag 530. For example, the identifier of the first tag 520 is A1, and the identifier of the second tag 530 is B1. In this case, the working identifier generated by the chip 521 of the first tag 520 is A1B1.

For the second tag 530, the first connector 533 of the second tag 530 is connected to the second connector 524 of the first tag 520, and a second connector 534 of the second tag 530 is connected to the first connector 543 of the third tag 540, that is, a first data end 531B of a chip 531 of the second tag 530 is connected to the second data end 521C of the chip of the first tag 520, and a second data end 531C of the chip 531 of the second tag 530 is connected to a first data end 541B of a chip 541 of the third tag 540. Therefore, the second tag 530 may send the identifier of the second tag 530 to the first tag 520 through the first data end 531B of the chip 531 of the second tag 530, the second tag 530 may further request or read, through the second data end 531C of the chip 531 of the second tag 530, the identifier of the third tag 540 connected to the second connector 534 from the third tag 540, and store the obtained identifier of the third tag 540 in a register of the chip 531 of the second tag 530. The chip 531 of the second tag 530 generates the second working identifier based on the identifier of the second tag 530 and the identifier of the third tag 540. For example, if the identifier of the second tag 530 is B1, and the identifier of the third tag 540 is C1, the working identifier generated by the second tag 530 chip is B1C1.

For the third tag 540, the first connector 543 of the third tag 540 is connected to the second connector 534 of the second tag 530, that is, the first data end 541B of the chip 541 of the third tag 540 is connected to the second data end 531C of the chip 531 of the second tag 530. Therefore, the third tag 540 may send the identifier of the third tag 540 to the second tag 530 through the first data end 541B of the chip 541 of the third tag 540. When a second connector 544 of the third tag 540 is not connected to another tag, the chip of the third tag 540 may generate the working identifier based on the identifier of the third tag 540. For example, if the identifier of the third tag 540 is C1, the working identifier generated by the chip of the third tag 540 includes C1.

For example, the identifier A1 of the first tag 520 may be represented as 0xAA??????????, the identifier B1 of the second tag 530 may be represented as 0xBB??????????, and the identifier C1 of the third tag 540 may be represented as 0xCC??????????, where "?" is a specified value of a specific identifier of the tag, and the value may be any value ranging from 0 to F, and the identifier has 48 bits in total. In this case, the working identifier A1B1 generated by the first tag 520 chip may include two fields. For example, A1B1 may be denoted as 0xAA??????????BB??????????, where a first field: AA?????????? represents the identifier A1 of the first tag 520, and a second field: BB?????????? represents the identifier B1 of the second tag 530. Similarly, the working identifier B1C1 generated by the second tag 530 may also include two fields: 0xBB?????????? and CC??????????, where a first field: BB?????????? represents the identifier B1 of the second tag 530, and a second field: CC?????????? represents the identifier C1 of the third tag 540. The working identifier generated by the third tag 540 also includes two fields: 0xCC?????????? and 000000000000, where a first field: CC?????????? represents the identifier of the third tag 540, and a second field: 000000000000 is empty.

For example, the reader 510 may send the read instruction, read a working identifier of each tag, and identify a corresponding connection relationship of the tag. For example, the first tag 520 may send the working identifier (referred to as the first working identifier) to the reader 510 in response to the read instruction, where the first working identifier includes the identifier of the first tag 520 and the identifier of the tag (the second tag 530 in this embodiment of this application) connected to the second connector 524 of the first tag 520. For example, the first working identifier includes a first field and a second field. For example, the first working identifier may be 0xAA??????????BB??????????, where a first field includes the identifier of the first tag 520, for example, AA??????????, and a second field includes the identifier of the second tag 530, for example, BB??????????. The second tag 530 may send the working identifier (referred to as the second working identifier) to the reader 510 in response to the read instruction. The second working identifier includes the identifier of the second tag 530 and the identifier of the tag (the third tag 540 in this embodiment of this application) connected to the second connector 534 of the second tag 530. The second working identifier includes a first field and a second field. For example, the second working identifier may be 0xBB??????????CC??????????, where a first field includes an identifier of the second tag 530, for example, BB??????????, and a second field includes an identifier of the third tag 540, for example, CC??????????. The third tag 540 may send the working identifier (referred to as the third working identifier) to the reader 510 in response to the read instruction, where the third working identifier includes the identifier of the third tag 540 and an identifier of a tag connected to the second connector 544 of the third tag 540. In this embodiment of this application, the second connector 544 of the third tag 530 is not connected to another tag, and therefore, the third working identifier includes only the identifier of the third tag. For example, the third working identifier includes a first field and a second field. For example, the third working identifier may be 0xCC??????????000000000000, where a first field: CC?????????? is the identifier of the third tag 540, and the second field 000000000000 is empty.

For example, the reader 510 may determine a corresponding connection relationship of each tag based on the received first working identifier, the received second working identifier, the received third working identifier, and the like. For example, the first tag 520 and the second tag 530 connected to the first tag 520 are determined based on the first working identifier; the second tag 530 and the third tag 540 connected to the second tag 530 are determined based on the second working identifier and the third working identifier; and a series connection relationship between the first tag 520, the second tag 530, and the third tag 540 is determined based on the first working identifier, the second working identifier, and the third working identifier, that is, the first tag 520 is connected to the second tag 530, and the second tag 530 is connected to the third tag 540.

For example, in a possible implementation, the first tag 520, the second tag 530, and the third tag 540 may detect connection states after being powered on and started up to work. For example, the first tag 520 detects whether the first tag 520 is connected to a second tag 530, and the second tag 530 detects whether the second tag 530 is connected to a third tag 540. If the first tag 520 is connected to the second tag 530, the first tag 520 obtains an identifier of the second tag 530 and generates a working identifier. If the second tag 530 is connected to the third tag 540, the second tag 530 obtains the identifier of the third tag 540 and generates a working identifier.

In another possible implementation, the reader 510 may send the pairing instruction, and the first tag 520, the second tag 530, and the third tag 540 may detect connection states in response to the pairing instruction sent by the reader 510. For example, the first tag 520 detects whether the first tag 520 is connected to a second tag 530, and the second tag 530 detects whether the second tag 530 is connected to a third tag 540. If the first tag 520 is connected to the second tag 530, the first tag 520 obtains an identifier of the second tag 530 and generates a working identifier. If the second tag 530 is connected to the third tag 540, the second tag 530 obtains an identifier of the third tag 540 and generates a working identifier.

In addition, in the foregoing example, the pairing instruction and the read instruction may be sent to all tags by the reader 510 in a broadcast manner, or may be sent to some specified tags. For example, the pairing instruction may further include an identifier of a target tag, and each tag may match an identifier of the tag with the identifier of the target tag. If the identifier of the tag matches the identifier of the target tag, the tag may obtain an identifier of a connected tag in response to the pairing instruction, and generate a working identifier. If the identifier of the tag is inconsistent with the identifier of the target tag, the tag does not need to respond to the pairing instruction.

Similarly, when sending the read instruction, the reader 510 may send the read instruction to all tags in a broadcast manner, or may send the read instruction to some specified tags. The read instruction sent by the reader 510 may also include an identifier of a target tag. Each tag matches an identifier of the tag with the identifier of the target tag, and responds to the read instruction of the reader 510 only when the identifier of the tag matches the identifier of the target tag, and sends a working identifier.

Based on a read command in an RFID protocol, a format of the pairing instruction sent by the reader may be shown in Table 1 in the foregoing example. A user-defined field reserved in the protocol in the storage area is reused, and the RN field may be 16 0s, or the RN field may be the identifier of the target tag, so that the target tag may be specified for pairing.

When there are a plurality of target tags, the reader repeats, in a polling manner, steps of pairing, reading, and identifying a corresponding connection relationship until pairing of all the target tags is completed, and corresponding connection relationships of all the target tags are identified.

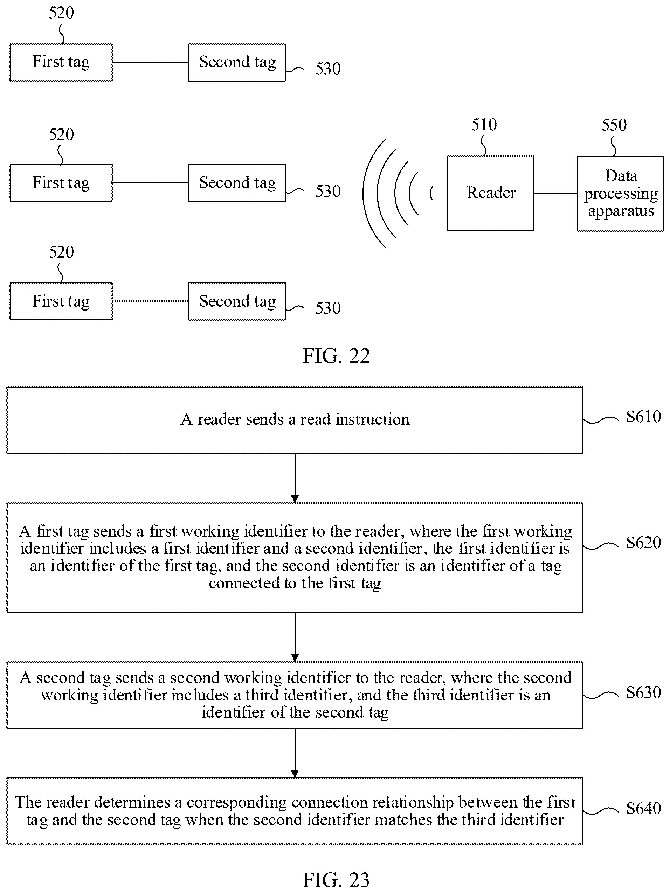

Refer to FIG. 22. In a possible implementation, the radio frequency identification system provided in this embodiment of this application further includes a data processing apparatus 550. The data processing apparatus 550 may be an intelligent terminal such as a smartphone or a tablet computer, or may be a computer, a background server, or the like. The data processing apparatus 550 may be configured to process data sent by the reader 510.

For example, when there are a large quantity of tags, a data capacity for storing corresponding connection relationships between the tags is large, and the reader 510 may fail to process a large amount of data, so that the data processing apparatus 550 may be used to segment the data.

For example, an example in which this application is applied to identification of a connection relationship between a port and an optical fiber in an optical distribution frame is further used. It is assumed that the reader 510 may store corresponding connection relationships between 50 pairs of tags. If there are more than 50 pairs of optical fibers and ports in the optical distribution frame, the reader 510 may fail to complete pairing of a remaining tag, and the data processing apparatus 550 needs to perform segmentation. For example, the data processing apparatus 550 divides 100 tags into a plurality of groups, and the reader 510 determines, through grouping, a corresponding connection relationship between tags in each group. In some other possible implementations, the data processing apparatus 550 may further perform processing such as combination, deduplication, and removing invalid data on corresponding connection relationship data that is between the tags and that is sent by the reader 510.

In addition, before identifying a correspondence between the plurality of tags (for example, the first tag 520 and the second tag 530), the reader 510 may send the read instruction in a broadcast manner to read identifiers of all the tags, and the reader 510 may store the read identifiers of the tags 220. For example, the reader 510 may store a tag list, where the tag list includes each tag and an identifier corresponding to the tag.

In some other possible implementations, the control tag list may alternatively be stored in the data processing apparatus 550. In addition to obtaining the tag list by broadcasting the read instruction by the reader 510, the data processing apparatus 550 may further obtain the control tag list from a configuration file, through a remote server, through manual recording, or in another manner, so that before starting identification, the reader 510 does not need to read, in a broadcast manner, the identifiers of all the tags to obtain the tag list.

As mentioned in the foregoing example, the data processing apparatus 550 may be an intelligent terminal device such as a mobile phone or a tablet computer, the reader 510 is in a communication connection to the data processing apparatus 550, and the reader 510 may send data to the data processing apparatus 550 for processing, for example, may send identified corresponding connection relationship data between the tags to the data processing apparatus 550 for processing and storage. Alternatively, the reader 510 may further send, to the data processing apparatus 550, working identifiers sent by the tags (for example, the first working identifier sent by the first tag, the second working identifier sent by the second tag, and the third working identifier sent by the third tag), and the data processing apparatus 550 determines the corresponding connection relationship between the tags based on the working identifiers sent by the tags.

The communication connection herein may be a wired connection such as a data line, or may be a wireless connection such as Bluetooth, infrared, or a wireless network.

In another possible implementation, the data processing apparatus 550 may alternatively be a remote server, the reader 510 is in a communication connection to the data processing apparatus 550, and the reader 510 may send data to the data processing apparatus 550 for processing, for example, may send the identified corresponding connection relationship data between the tags to the data processing apparatus 550 for processing and storage. Alternatively, the reader 510 may further send, to the data processing apparatus 550, working identifiers sent by the tags (for example, the first working identifier sent by the first tag, the second working identifier sent by the second tag, and the third working identifier sent by the third tag), and the data processing apparatus 550 determines the corresponding connection relationship between the tags based on the working identifiers sent by the tags.

An embodiment of this application further provides a radio frequency identification method. The method is applied to the radio frequency identification system provided in the foregoing examples. The radio frequency identification system includes a reader, a controlling tag, and a controlled tag. The controlling tag is electrically connected to the controlled tag. Refer to FIG. 23. The method includes the following steps.

S610: The reader sends a read instruction.

S620: A first tag sends a first working identifier to the reader, where the first working identifier includes a first identifier and a second identifier, the first identifier is an identifier of the first tag, and the second identifier is an identifier of a tag connected to the first tag.

The first tag sends the first working identifier to the reader in response to the read instruction sent by the reader, where the first working identifier includes the first identifier and the second identifier, the first identifier is the identifier of the first tag, and the second identifier is the identifier of the tag connected to the first tag. For example, the first working identifier may include a first field and a second field, where the first field is the identifier of the first tag, and the second field is the identifier of the tag connected to the first tag.

S630: A second tag sends a second working identifier to the reader, where the second working identifier includes a third identifier, and the third identifier is an identifier of the second tag.

The second tag sends the second working identifier to the reader in response to the read instruction sent by the reader, where the second working identifier includes the third identifier, and the third identifier is the identifier of the second tag. For example, the second working identifier includes a first field, and the first field is the identifier of the second tag.

S640: The reader determines a corresponding connection relationship between the first tag and the second tag when the second identifier matches the third identifier.

When the second identifier matches the third identifier, that is, the identifier of the tag connected to the first tag matches the identifier of the second tag, the reader may determine the corresponding connection relationship between the first tag and the second tag.

In the radio frequency identification method provided in this embodiment of this application, the first tag may send the identifier of the first tag and the identifier of the tag connected to the first tag to the reader in response to the read instruction of the reader; and the second tag may also send the identifier of the second tag to the reader in response to the read instruction of the reader, so that when the identifier of the second tag matches the identifier of the tag connected to the first tag, it may be determined that the first tag is correspondingly connected to the second tag.

For example, the identifier of the first tag is A1, and the identifier of the second tag is B1. If the first working identifier sent by the first tag includes A1B1, and the second working identifier sent by the second tag includes B1, because B1 in the first working identifier matches B1 in the second working identifier, the corresponding connection relationship between the first tag with the identifier A1 and the second tag with the identifier B1 may be determined.

Alternatively, the identifier of the first tag is A1, and the identifier of the second tag is B1. If the first working identifier sent by the first tag includes A1B1, and the second working identifier sent by the second tag includes B1A1, because B1 in the first working identifier matches B1 in the second working identifier, and A1 in the second working identifier matches A1 in the first working identifier, the corresponding connection relationship between the first tag with the identifier A1 and the second tag with the identifier B1 may be determined.

In another possible implementation, the identifier of the first tag is A1, the identifier of the second tag is B1, and an identifier of a third tag is C1. For the first tag and the second tag, if the first working identifier sent by the first tag includes A1B1, and the second working identifier sent by the second tag includes B1, the corresponding connection relationship between the first tag with the identifier A1 and the second tag with the identifier B1 may be determined. If the working identifier sent by the second tag includes B1C1, and a working identifier sent by the third tag includes C1, a corresponding connection relationship between the second tag with the identifier B1 and the third tag with the identifier C1 may be determined. Then, with reference to the corresponding connection relationship between the first tag with the identifier A1 and the second tag with the identifier B1, it may be determined that the first tag with the identifier A1, the second tag with the identifier B1, and the third tag with the identifier C1 are sequentially connected in series.

For example, when being started up and powered on, the tag may obtain an identifier of a connected tag, generate a working identifier, and send the working identifier to the reader in response to the read instruction of the reader.

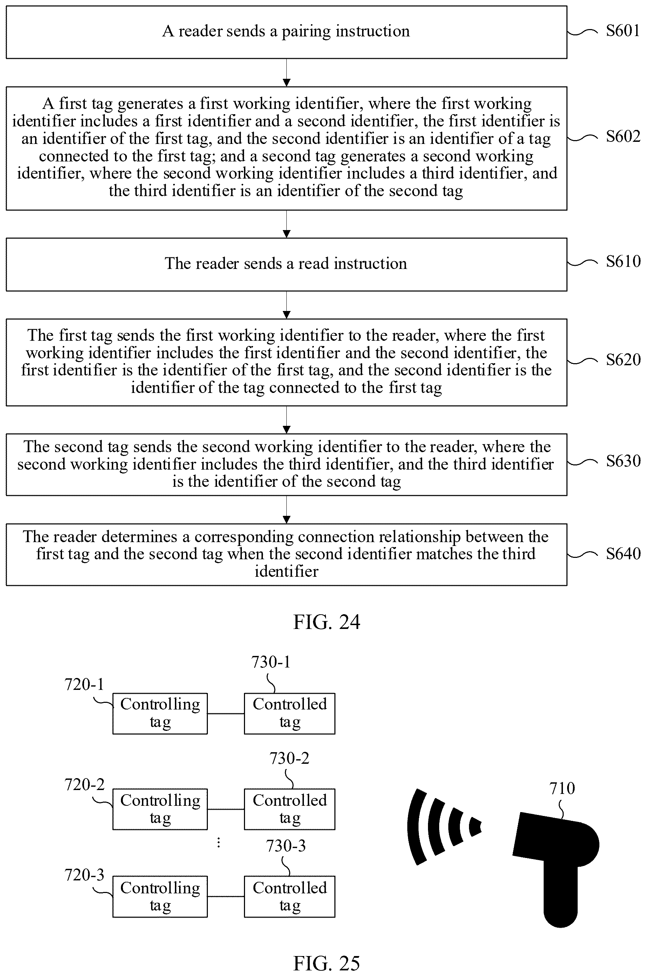

Alternatively, before sending the read instruction, the reader may further send a pairing instruction. For example, refer to FIG. 24. The method further includes the following steps.

S601: The reader sends the pairing instruction.

S602: The first tag generates the first working identifier, where the first working identifier includes the first identifier and the second identifier, the first identifier is the identifier of the first tag, and the second identifier is the identifier of the tag connected to the first tag; and the second tag generates the second working identifier, where the second working identifier includes the third identifier, and the third identifier is the identifier of the second tag.

For the first tag and the second tag shown in FIG. 18, the first tag obtains, in response to the pairing instruction sent by the reader, an identifier of a tag (the second tag in this embodiment of this application) connected to the first tag, and generates a working identifier based on the identifier of the first tag and the identifier of the second tag; and the second tag obtains, in response to the pairing instruction, an identifier of the tag (the first tag in this embodiment of this application) connected to the second tag, and generates a working identifier based on the identifier of the second tag and the identifier of the first tag.

In this case, after the reader sends the read instruction, the first tag sends the working identifier to the reader (referred to as the first working identifier), the second tag sends the working identifier (referred to as the second working identifier) to the reader, and the reader may exchange a first field and a second field of the received first working identifier or second working identifier to form a new identifier, and then match the new identifier with the received identifier to search for a matching identifier. For example, the first working identifier is A1B1, and the second working identifier is B1A1. After the first field and the second field of the first working identifier are exchanged, the formed new identifier is B1A1. It is found through comparison that the new identifier matches the second working identifier B1A1 sent by the second tag, so that the corresponding connection relationship between the first tag and the second tag may be determined.

For the first tag and the second tag shown in FIG. 19, the first tag obtains, in response to the pairing instruction sent by the reader, an identifier of a tag (the second tag in this embodiment of this application) connected to the first tag, and generates a working identifier based on the identifier of the first tag and the identifier of the second tag; and the second tag generates, in response to the pairing instruction, the working identifier based on the identifier of the second tag.

For the first tag, the second tag, and the third tag shown in FIG. 21, the first tag obtains, in response to the pairing instruction sent by the reader, an identifier of a tag (the second tag in this embodiment of this application) connected to a second connector of the first tag, and generates the working identifier based on the identifier of the first tag and the identifier of the second tag; the second tag obtains, in response to the pairing instruction, an identifier of a tag (the third tag in this embodiment of this application) connected to the second connector of the second tag, and generates the working identifier based on the identifier of the second tag and the identifier of the third tag; and the third tag generates the working identifier based on the identifier of the third tag in response to the pairing instruction.

Then the reader sends the read instruction, and the first tag, the second tag, and the like send the generated working identifiers to the reader.

For example, the pairing instruction, the read instruction, and the like may be sent by the reader in a broadcast manner, or the pairing instruction and the read instruction may further include an identifier of a target tag, so that pairing may be performed on some specified tags, and a corresponding connection relationship between the tags may be identified.

In the examples shown in FIG. 3 to FIG. 16, when identifying the pairing relationship between the controlling tag and the controlled tag, the reader sends the pairing instruction, where the pairing instruction includes the identifier of the target controlling tag. When identifying that the controlling tag is the target controlling tag, the controlling tag sends the first control signal to the controlled tag connected to the controlling tag, and configures the controlled tag connected to the controlling tag to be in the working state, another controlled tag does not receive the first control signal and is in the dormant state, and then the reader broadcasts the read instruction. In this case, the identifiers of all the controlling tags and the identifier of the controlled tag in the working state can be read. In this way, the reader can determine the corresponding connection relationship between the controlled tag and the target controlling tag based on the identifier of the target controlling tag and the received identifier of the controlled tag, and pair the controlled tag with the target controlling tag.

Based on the radio frequency identification system shown in FIG. 3, an embodiment of this application further provides another radio frequency identification system. A controlled tag sends, when responding to a reader, an identifier and information indicating that the controlled tag has obtained a first control signal, or a controlled tag sends, when responding to a reader, an identifier and information indicating that the controlled tag does not obtain a first control signal. Therefore, the information, sent by the reader through the controlled tag, indicating that the controlled tag has obtained the first control signal may be used to distinguish the controlled tag that receives the first control signal from the controlled tag that does not receive the first control signal. In this way, a state of the controlled tag does not need to be switched, to increase a responding speed and reduce costs. The following describes in detail the radio frequency identification system provided in this embodiment of this application with reference to the accompanying drawings. Some principles of the radio frequency identification system provided in this embodiment of this application are the same as the principles of the radio frequency identification system provided in the foregoing examples, and only some differences exist in specific identification and pairing manners. Therefore, only the differences are described. For details that are not described in embodiments of this application, refer to related content in the foregoing embodiments.

For example, refer to FIG. 25. The radio frequency identification system in this embodiment of this application includes a reader 710, a controlling tag 720 (for example, a controlling tag 720-1 to a controlling tag 720-3 shown in FIG. 25), and a controlled tag 730 (for example, a controlled tag 730-1 to a controlled tag 730-3 shown in FIG. 25). The controlling tag 720 is in a communication connection to the controlled tag 730.

For example, the radio frequency identification system may be applied to determining of a connection relationship between a port and an optical fiber in an optical distribution frame. For example, the optical distribution frame includes a plurality of ports, and one controlling tag 720 is disposed on each port. For example, the controlling tag 720-1 is disposed on a first port, the controlling tag 720-2 is disposed on a second port, and a controlling tag 720-3 is disposed on a third port. The controlled tag 730 is correspondingly disposed on the optical fiber. When the optical fiber is connected to the port, the controlled tag 730 is connected to the controlling tag 720. For example, the controlled tag 730-1 is disposed on a first optical fiber, the controlled tag 730-2 is disposed on a second optical fiber, and the controlled tag 730-3 is disposed on a third optical fiber.

The reader 710 is configured to send an instruction to the tags (including the controlling tag 720 and the controlled tag 730) to read and write data of the tags.

For example, the reader 710 is configured to broadcast a pairing instruction to the controlling tag 720, where the pairing instruction includes an identifier of the controlling tag, the controlling tag is a target controlling tag, and each controlling tag 720 or controlled tag 730 has a unique identifier. For example, the identifier of the controlling tag 720 or the controlled tag 730 may be a unique string of digital codes.

When the reader 710 sends the pairing instruction to the controlling tag 720 in a broadcast manner, the controlling tag 720 that receives the pairing instruction determines whether an identifier of the controlling tag 720 matches the identifier of the controlling tag 720 in the pairing instruction. If the identifiers match, indicating that the controlling tag 720 is the target controlling tag, the controlling tag 720 responds to the pairing instruction; or if the identifiers do not match, indicating that the controlling tag 720 is not the target controlling tag, the controlling tag 720 does not need to respond to the pairing instruction.

For example, the controlling tag 720 is configured to output, in response to matching between the identifier of the controlling tag 720 and the identifier in the pairing instruction, the first control signal to the controlled tag 730 connected to the controlling tag 720.

The controlled tag 730 is configured to obtain the first control signal sent by the controlling tag 720.

When receiving the read instruction of the reader 710, the controlled tag 730 responds to the reader 710 with an identifier of the controlled tag 730 and information indicating whether the controlled tag has obtained the first control signal. Therefore, depending on whether the controlled tag has sent the information indicating that the controlled tag has obtained the first control signal, a controlled tag 730 that has received the first control signal may be distinguished from a controlled tag 730 that does not receive the first control signal. Only the target controlling tag 720 sends the first control signal, that is, only the controlled tag 730 connected to the target controlling tag 720 sends the information indicating that the controlled tag has obtained the first control signal. Therefore, a corresponding connection relationship between the controlled tag that sends the information indicating that the controlled tag has obtained the first control signal and the target controlling tag may be determined, that is, the controlled tag is paired with the target controlling tag.

For example, the reader 710 is further configured to send the read instruction in a broadcast manner, where the read instruction is used to obtain identifiers of all tags. After receiving the read instruction sent by the reader 710, the controlled tag 730 sends the identifier of the controlled tag 730 and the information indicating that the controlled tag has obtained the first control signal to the reader 710 in response to the read instruction.

The reader 710 is further configured to determine the corresponding connection relationship or a corresponding pairing relationship between the controlled tag 730 and the target controlling tag based on the identifier of the controlling tag 720 (that is, the target controlling tag) in the pairing instruction, the identifier of the controlled tag 730, and the information, sent by the controlled tag, indicating that the controlled tag has obtained the first control signal.

For example, if the pairing instruction includes an identifier of the controlling tag 720-1, and after the read instruction is broadcast, an identifier sent by the controlled tag 730-1 and the information indicating that the controlled tag has obtained the first control signal are read, a corresponding connection relationship between the controlled tag 730-1 and the controlling tag 720-1, which may also be referred to as the pairing relationship between the controlled tag 730-1 and the controlling tag 720-1, may be determined.

If the controlling tag 720-1 is disposed on a port 1, and the controlled tag 730-1 is disposed on an optical fiber 1, a corresponding connection relationship between the optical fiber 1 and the port 1 may be determined.

The foregoing process is repeated to perform pairing on different controlling tags, so as to complete pairing of all tags.

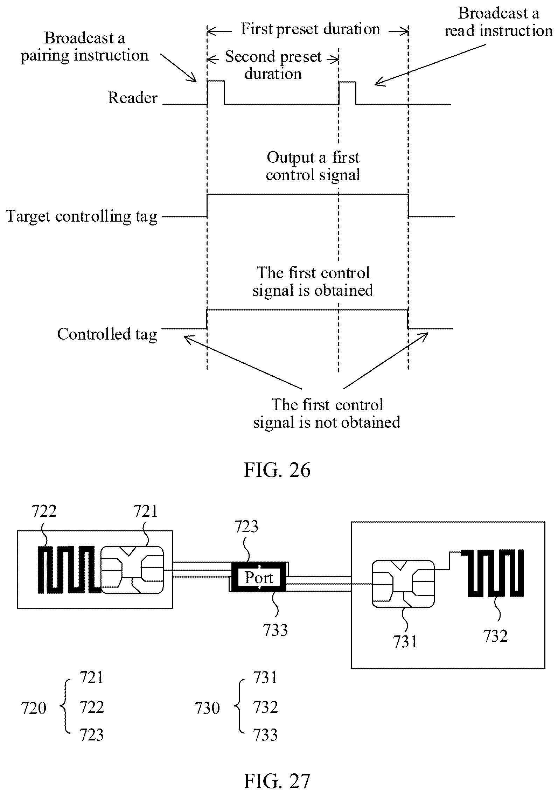

For example, as shown in FIG. 26, if duration in which the target controlling tag outputs the first control signal to the controlled tag is first preset duration, that is, starting from time when the reader broadcasts the pairing instruction (where signal transfer time and data processing time of the chip are ignored), within the first preset duration, the controlled tag connected to the target controlling tag is in a state of obtaining the first control signal, and after the first preset duration, the controlled tag is in a state of not obtaining the first control signal, and the reader is further configured to send the read instruction in a broadcast manner within second preset duration after sending the pairing instruction, where the second preset duration is less than or equal to the first preset duration. The following briefly describes structures of the controlling tag 720 and the controlled tag 730 provided in embodiments of this application with reference to examples. Refer to FIG. 27. The controlling tag 720 includes a first tag chip 721, a first antenna 722, and a first connector 723. The first tag chip 721 includes a first antenna end and a first signal end, the first antenna end is connected to the first antenna 722, the first signal end is connected to the first connector 723, and the first connector 723 is configured to connect to the controlled tag 730. The identifier of the controlling tag 720 matches the identifier in the pairing instruction, that is, when the controlling tag 720 is the target controlling tag, the first tag chip 721 outputs the first control signal through the first signal end in response to the pairing instruction.

The controlled tag 730 includes a second tag chip 731, a second antenna 732, and a second connector 733. The second tag chip 731 includes a second antenna end and a second signal end. The second antenna end is connected to the second antenna 732, the second signal end is connected to the second connector 733, and the second connector 733 is configured to connect to the controlling tag 720. For example, in this embodiment of this application, the second connector 733 is connected to the first connector 723 of the controlling tag 720. The controlling tag 720 may send the first control signal to the controlled tag 730 through the first connector 723, the second tag chip 731 is configured to obtain the first control signal sent by the controlling tag 720, and the second tag chip 731 is further configured to send, to the reader through the second antenna 732 in response to the read instruction, the identifier of the controlled tag 730 and the information indicating that the controlled tag has obtained the first control signal.

For example, the reader sends the pairing instruction in a broadcast manner, where the pairing instruction includes an identifier of a target controlling tag. All the controlling tags 720 can receive the pairing instruction that is sent by the reader in a broadcast manner, and compare the identifier in the pairing instruction with identifiers of the controlling tags 720. When the identifier of the controlling tag 720 matches the identifier in the pairing instruction, the controlling tag is determined as the target controlling tag, and may respond to the pairing instruction; otherwise, the controlling tag may not respond to the pairing instruction.

In a possible implementation, a manner in which the target controlling tag responds to the pairing instruction may include: sending a first message to the reader, where the first message indicates that the target controlling tag receives the pairing instruction.

The first tag chip 721 is configured to output the first control signal through the first signal end in response to the pairing instruction, where the first control signal is transmitted to the second tag chip 731 through the output end of the first tag chip 721, the first connector 723, and the second connector 733, and the second tag chip 731 records, in response to the first control signal, the information indicating that the controlled tag has obtained the first control signal.

If the reader broadcasts the read instruction, and reads the identifiers of all the controlling tags (including the identifier of the target controlling tag) and the identifier of the controlled tag 730, when responding to the read instruction of the reader, the controlled tag 730 sends the identifier and information indicating whether the controlled tag has obtained the first control signal, the controlled tag 730 connected to the target controlling tag obtains the first control signal, and a remaining controlled tag 730 does not obtain the first control signal. Therefore, in this case, the reader may read the identifiers of all the controlling tags 720, identifiers of all controlled tags, and the information, sent by the controlled tag connected to the controlling tag, indicating that the controlled tag has obtained the first control signal.

The reader reads the identifier of the controlled tag 730, determines the corresponding connection relationship between the controlled tag 730 and the target controlling tag based on the identifier of the target controlling tag, the identifier of the controlled tag, and the information indicating that the controlled tag has obtained the first control signal in the sent pairing instruction, and configures the target controlling tag and the controlled tag 730 that sends the information indicating that the first control signal has been obtained as a pair. If there are a plurality of controlling tags 720 and a plurality of controlled tags 730, the foregoing steps are repeated to complete pairing of all the controlling tags 720.

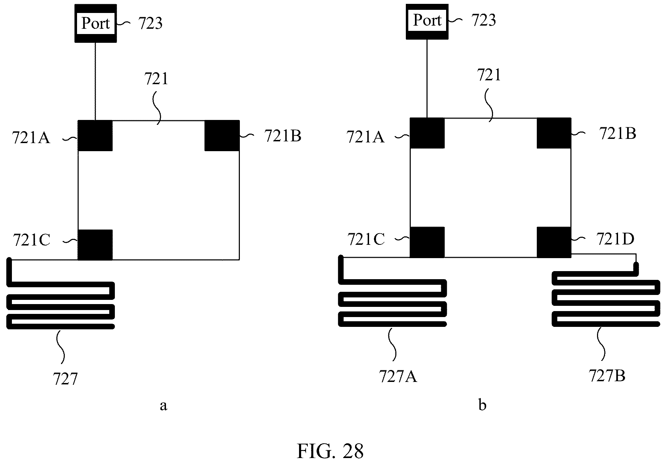

FIG. 28 is a diagram of a structure of a controlling tag 720. The controlling tag 720 includes a first tag chip 721 and a first antenna 722, and the first tag chip 721 includes a first signal end 721A, a ground end 721B, and a first antenna end 721C. In a possible implementation, as shown in diagram a in FIG. 28, the first tag chip 721 may be connected to one first antenna 722. For example, the first antenna end 721C is connected to the first antenna 722. In another possible implementation, as shown in diagram b in FIG. 28, the first tag chip 721 may alternatively be connected to two first antennas. Correspondingly, the first tag chip 721 includes two first antenna ends, which are respectively denoted as a first antenna end 721C and a first antenna end 721D. The first antenna end 721C is connected to the first antenna 722A, and the first antenna end 721D is connected to the first antenna 722B. The output end 721A of the first tag chip 721 is connected to the first connector 723, and the first connector 723 is configured to connect to the second connector of the controlled tag. When the identifier of the controlling tag 720 matches the identifier included in the pairing instruction, the first tag chip 721 of the controlling tag 720 may output the first control signal through the first signal end 721A in response to the pairing instruction sent by the reader. For example, the first control signal may be a high level signal, and the first control signal is transmitted to the controlled tag through the first connector 723 and the second connector 733.

Based on a read command in an RFID protocol, a format of the pairing instruction broadcast by the reader may be shown in Table 1 in the foregoing example, and is not described in detail in this embodiment of this application.

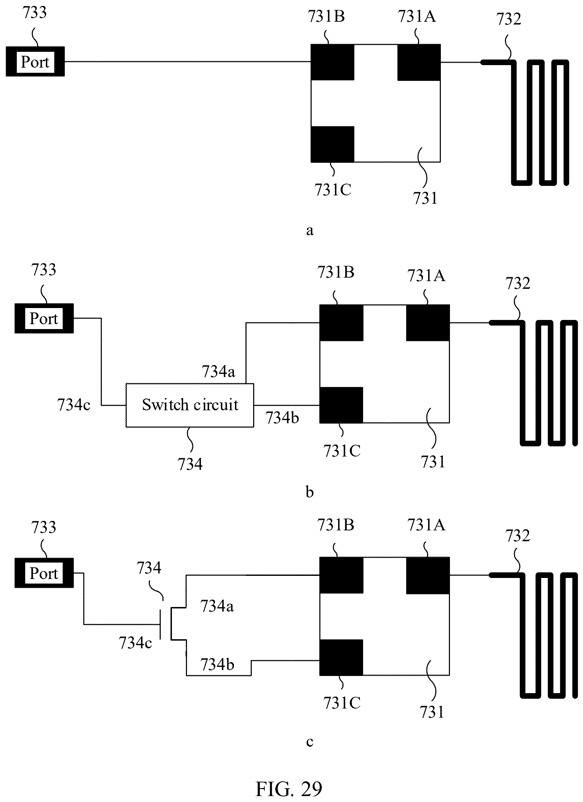

In a possible implementation, with reference to diagram a in FIG. 29, the controlled tag 730 includes a second tag chip 731, a second antenna 732, and a second connector 733; and the second tag chip 731 includes a second antenna end 731A, a second signal end 731B, and a ground end 731C. The second antenna end 731A is connected to the second antenna 732, the second signal end 731B is connected to the second connector 733, and the second connector 733 is connected to the first connector 723 of the controlling tag 720.

The second tag chip 731 is configured to obtain, through the second signal end 731B, information about the first control signal sent by the controlling tag 710, and the second tag chip 731 is further configured to: send, to the reader in response to the read instruction through the second antenna 732, the identifier of the controlled tag 730 and the information indicating that the controlled tag has obtained the first control signal, for example, when the controlled tag 730 obtains the first control signal, send the information indicating that the controlled tag has obtained the first control signal; or when the controlled tag 730 does not obtain the first control signal, send information indicating that the controlled tag does not obtain the first control signal.

In the foregoing example, using the first control signal having a high level as an example, the second tag chip 731 may detect a voltage state of the second signal end 731B, and obtain the first control signal when detecting that the second signal end 731B has a high level, for example, obtain, when detecting that the second signal end 731B of the second tag chip 731 has a high level, the first control signal sent by the controlling tag 710.

An embodiment of this application further provides another implementation of a controlled tag 730. For example, as shown in diagram b in FIG. 29, the controlled tag 730 includes a second tag chip 731, a second antenna 732, a second connector 733, and a switch circuit 734, and the second tag chip 731 includes a second antenna end 731A, a second signal end 731B, and a ground end 731C. The second antenna end 731A is connected to the second antenna 732. The switch circuit 734 includes a first end 734a, a second end 734b, and a control end 734c. The first end 734a of the switch circuit 734 is connected to the second signal end 731B, the second end 734b of the switch circuit 734 is connected to the ground end 731C, and the control end 734c of the switch circuit 734 is connected to the second connector 733. For example, the switch circuit 734 is configured to be conducted when the control end 734c receives the first control signal, or be disconnected. The second tag chip 731 is configured to detect a conduction state of the switch circuit 734 (for example, detect a resistance value of the switch circuit 734), and obtain, by detecting the conduction state of the switch circuit 734, the first control signal sent by the controlling tag.

For example, with reference to c in FIG. 29, the switch circuit 734 may be a transistor, the control end 734c of the transistor is connected to the first connector 723, the first end 734a of the transistor is connected to the second signal end 731B, and the second end 734b of the transistor is connected to the ground end 731C. For example, the first control signal has a high level, and the transistor may be an N-type transistor. The control end 734c is conducted when the control end 734c is at a high level, and is cut off when the control end 734c is at a low level.

In a possible implementation, the controlled tag 730 may record, when obtaining the first control signal, the information indicating that the first control signal has been obtained.

For example, using the first control signal having a high level as an example, the second tag chip 731 may detect a voltage state of the second signal end 731B, and when detecting that the second signal end 731B is at a high level, record the information indicating that the first control signal has been obtained.

Alternatively, in another possible implementation, the second tag chip 731 may detect a conduction state of the switch circuit, and when detecting that the switch circuit is conducted, record the information indicating that the first control signal has been obtained.

As mentioned in the foregoing example, because duration in which the controlling tag outputs the first control signal is limited, to avoid a case in which the controlled tag connected to the target controlling tag is in the state of not obtaining the first control signal when the reader broadcasts the read instruction, the duration in which the target controlling tag outputs the first control signal to the controlled tag is first preset duration, and the reader sends the read instruction in a broadcast manner within the second preset duration after sending the pairing instruction to read the controlled tag identifier. The second preset duration is less than or equal to the first preset duration.

In another possible implementation, a delay circuit may be further disposed on the controlling tag or the controlled tag, to prolong duration of the first control signal, so as to avoid a problem that the first control signal cannot be accurately identified for pairing due to insufficient duration of the first control signal.

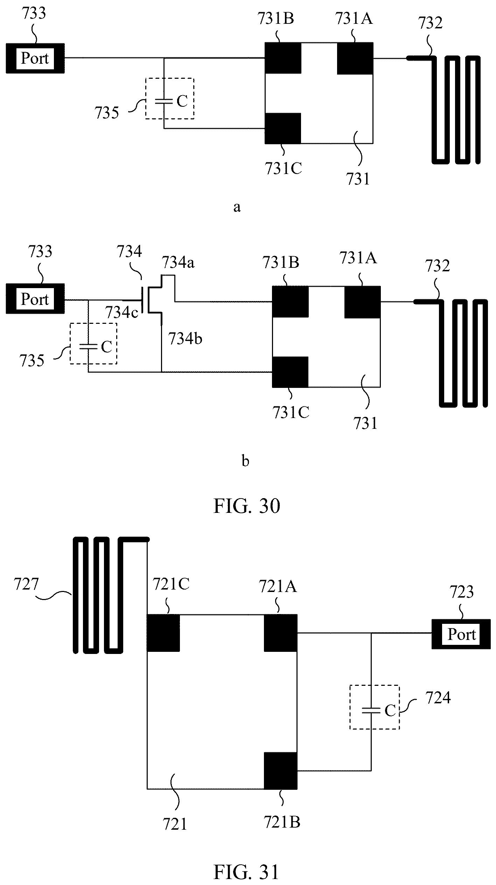

For example, based on diagram a in FIG. 29, refer to diagram a in FIG. 30. The second tag chip 731 is configured to: when the second signal end 731B receives the first control signal, record the information indicating that the controlled tag has obtained the first control signal. In this case, the controlled tag 730 includes a delay circuit 735. The delay circuit 735 is connected to the second connector 733 of the controlled tag 730, and the delay circuit 735 is configured to prolong the duration of the first control signal. For example, an example in which the delay circuit 735 includes a capacitor C is used. A first end of the capacitor C is connected to the second connector 733, that is, connected to the second signal end 731B of the second tag chip 731, and a second end of the capacitor C is connected to the ground end 731C. For example, the first control signal has a high level. When the controlling tag 720 sends the first control signal to the second connector 733 and the second signal end 731B of the controlled tag 730 through the first connector 723, the capacitor C is charged at the same time, and the capacitor C stores charges and a voltage of the capacitor C increases. When the controlling tag 720 stops outputting the first control signal, the capacitor C releases the stored charges, a voltage of the second signal end 731B does not decrease instantly, and the capacitor C discharges to maintain a level of the second signal end 731B to decrease slowly at a high level stage, to prolong the duration of the first control signal.

In another possible implementation, based on c in FIG. 29, refer to diagram b in FIG. 30. The controlled tag 730 includes a second tag chip 731, a second antenna 732, a second connector 733, a switch circuit 734, and a delay circuit 735, and the second tag chip 731 includes a second antenna end 731A, a second signal end 731B, and a ground end 731C. The second antenna end 731A is connected to the second antenna 732. The switch circuit 734 includes a first end 734a, a second end 734b, and a control end 734c. The switch circuit 734 shown in FIG. 30 b is a transistor. The first end 734a of the switch circuit 734 is connected to the second signal end 731B, the second end 734b of the switch circuit 734 is connected to the ground end 731C, and the control end 734c of the switch circuit 734 is connected to the second connector 733.

For example, the switch circuit 734 is configured to be conducted when the control end 734c receives the first control signal, or be disconnected. The second tag chip 731 is configured to: detect a conduction state of the switch circuit 734 (for example, detect a resistance value of the switch circuit 734). The delay circuit 735 is connected to the second connector 733 of the controlled tag 730, and the delay circuit 735 is configured to prolong the duration of the first control signal. For example, an example in which the delay circuit 734 includes a capacitor C is used. A first end of the capacitor C is connected to the second connector 733, that is, connected to the control end 734c of the switch circuit 734, and a second end of the capacitor C is connected to the ground end 731C. For example, the first control signal has a high level. When the controlling tag 720 sends the first control signal to the second connector 733 through the first connector 723, a level of the control end 734c of the switch circuit 734 is increased, the switch circuit 734 is conducted, the first control signal charges the capacitor C at the same time, and the capacitor C stores charges and a voltage of the capacitor C is increased. When the controlling tag 720 stops outputting the first control signal, the capacitor C releases the stored charges, a voltage of the control end 734c of the switch circuit 734 does not decrease instantly, and the capacitor C discharges to maintain a level of the control end 734c of the switch circuit 734 to decrease slowly at a high level stage, to prolong the duration of the first control signal.

The foregoing example is described by using an example in which the delay circuit is disposed on the controlled tag 730. In some other possible implementations, the delay circuit may alternatively be disposed on the controlling tag.

For example, refer to FIG. 31. The controlling tag 720 includes a delay circuit 724. The delay circuit 724 is connected to a first connector 723 of the controlling tag 720. Similarly, an example in which a capacitor C is used as the delay circuit is used for description. A first end of the capacitor C is connected to the first connector 723 of the controlling tag 720, that is, connected to a first signal end 721A of the first tag chip 721, and a second end of the capacitor C is connected to a ground end 721B of the first tag chip 721. When the first signal end 721A of the first tag chip 721 outputs the first control signal, for example, the first control signal has a high level, the first control signal charges the capacitor C, and the capacitor C stores charges and a voltage of the capacitor C increases. When the first signal end 721A of the first tag chip 721 stops outputting the high level, the capacitor C discharges, so that the first signal end 721A (or the first connector 723) can maintain a high level state and the voltage slowly decreases. In this way, the duration of the first control signal is prolonged.

In the foregoing examples, the capacitor is used as the delay circuit for description. In some other possible implementations, the delay circuit may further include another structure.

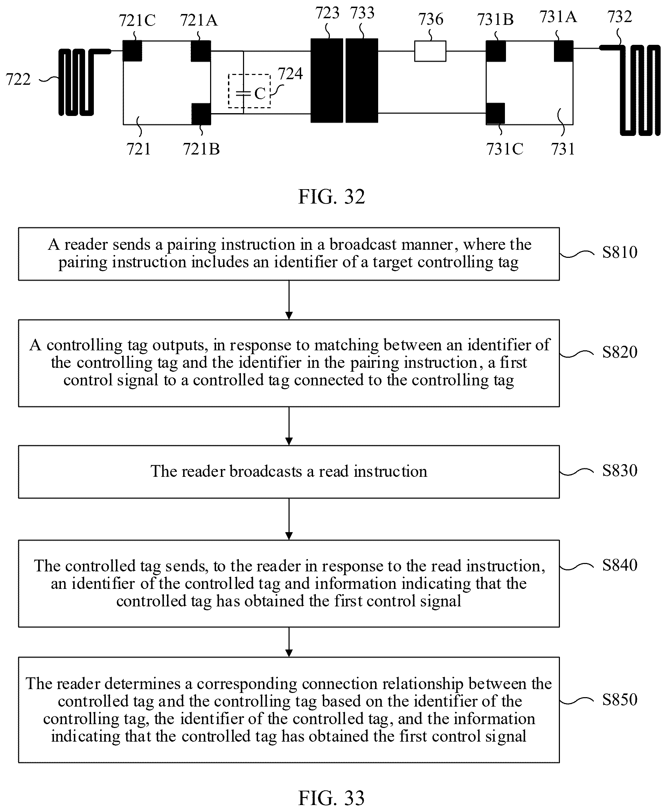

In addition, to ensure signal stability, in some possible implementations, as shown in FIG. 32, a magnetic bead 736 is connected in series between the second connector 733 of the controlled tag 730 and the second signal end 731B of the second tag chip 731, to enhance voltage signal stability.

Based on the radio frequency identification system provided in embodiments of this application, with reference to FIG. 33, an embodiment of this application further provides a radio frequency identification method applied to the system.

S810: A reader sends a pairing instruction in a broadcast manner, where the pairing instruction includes an identifier of a controlling tag.

Each controlling tag or controlled tag has a unique identifier, the pairing instruction includes the identifier of the controlling tag, and the controlling tag is a paired target controlling tag. A controlling tag that receives the pairing instruction may compare an identifier of the controlling tag with the identifier in the pairing instruction. If the identifier of the controlling tag matches the identifier included in the pairing instruction, the controlling tag is the target controlling tag, and may respond to the pairing instruction of the reader. If the identifier of the controlling tag does not match the identifier included in the pairing instruction, the controlling tag is not the target controlling tag, and does not need to respond to the pairing instruction broadcast by the reader.

S820: The controlling tag outputs, in response to matching between the identifier of the controlling tag and the identifier in the pairing instruction, a first control signal to a controlled tag in a communication connection to the controlling tag.

The controlling tag is in the communication connection to the controlled tag. For example, in this embodiment of this application, a first connector of the controlling tag is connected to a second connector of the controlled tag. If the identifier of the controlling tag matches the identifier included in the pairing instruction, the controlling tag is the target controlling tag, and the target controlling tag may output, in response to the pairing instruction, the first control signal to a controlled tag connected to the target controlling tag.

In a possible implementation, the controlling tag includes a first tag chip, a first antenna, and a first connector, the first tag chip includes a first antenna end and a first signal end, the first antenna end is connected to the first antenna, the first signal end is connected to the first connector, and the first connector is configured to connect to the controlled tag; and that the controlling tag outputs, in response to the matching between the identifier of the controlling tag and the identifier in the pairing instruction, the first control signal to the controlled tag connected to the controlling tag includes:
The first tag chip outputs the first control signal through the first signal end in response to the matching between the identifier of the controlling tag and the identifier in the pairing instruction.

S830: The reader broadcasts a read instruction.

For example, the reader is further configured to send the read instruction in a broadcast manner, where the read instruction is used to obtain identifiers of all tags in a working state, especially an identifier of the controlled tag connected to the target controlling tag.

S840: The controlled tag sends, to the reader in response to the read instruction, the identifier of the controlled tag and information indicating that the controlled tag has obtained the first control signal.

The controlling tag sends the first control signal to the controlled tag, and the controlled tag sends, to the reader in response to the read instruction sent by the reader, the identifier and the information indicating that the controlled tag has obtained the first control signal.

S850: The reader determines a corresponding connection relationship between the controlled tag and the controlling tag based on the identifier of the controlling tag, the identifier of the controlled tag, and the information indicating that the controlled tag has obtained the first control signal.

In this embodiment of this application, because only the target controlling tag sends the first control signal, only the controlled tag connected to the target controlling tag is in a state of obtaining the first control signal, that is, only the controlled tag connected to the target controlling tag sends the information indicating that the controlled tag has obtained the first control signal, and a remaining controlled tag sends information indicating that the controlled tag does not obtain the first control signal. Therefore, the information indicating that the controlled tag has obtained the first control signal may be sent to distinguish the controlled tag connected to the target controlling tag from another controlled tag. Therefore, the reader 710 determines a corresponding connection relationship or pairing relationship between the controlled tag and the target controlling tag based on the identifier of the controlling tag in the sent pairing instruction, the received identifier sent by the controlled tag, and the information indicating that the controlled tag has obtained the first control signal.

For example, before S840, the method further includes: The controlled tag obtains the first control signal.

For example, in a possible implementation, with reference to the descriptions of the structure of the controlled tag in the example shown in diagram a in FIG. 29, the second tag chip of the controlled tag obtains the first control signal. Alternatively, in another possible implementation, with reference to the descriptions of the structure of the controlled tag in the example shown in diagram b in FIG. 29, the controlled tag includes a switch circuit, the switch circuit is conducted when receiving the first control signal, and the controlled tag detects, through the second tag chip, that the switch circuit is conducted, to obtain the first control signal.

For example, when obtaining the first control signal, the controlled tag may record the information indicating that the controlled tag has obtained the first control signal. For example, in some possible implementations, the controlled tag detects and obtains the first control signal through the second tag chip, and when the second tag chip detects and obtains the first control signal, records the information indicating that the controlled tag has obtained the first control signal. Alternatively, in some other possible implementations, the controlled tag further includes a switch circuit. The switch circuit is configured to be conducted in response to the first control signal, the second tag chip is configured to detect that the switch circuit is conducted, to obtain the first control signal, and when the second tag chip detects a conduction state of the switch circuit, record the information indicating that the controlled tag has obtained the first control signal.

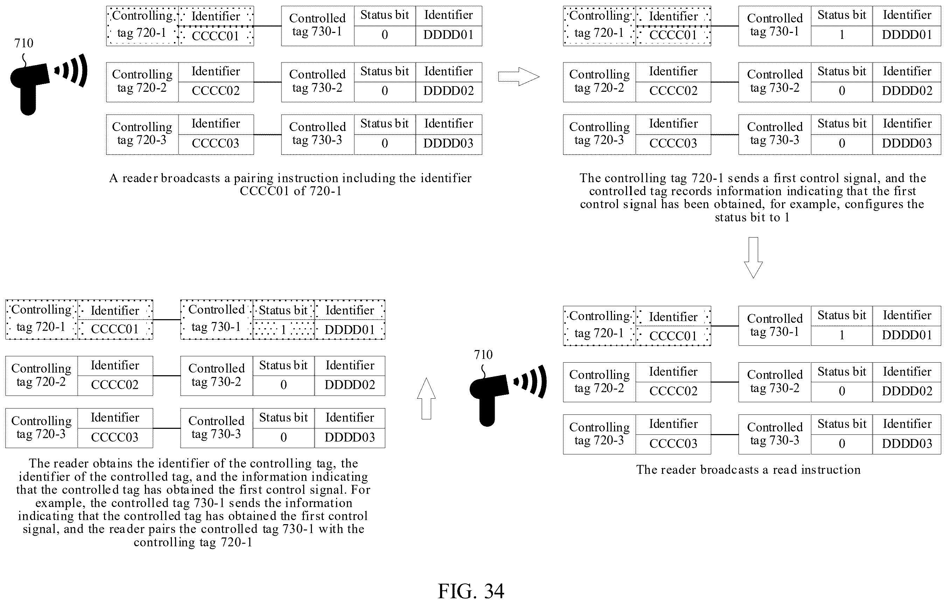

For example, with reference to FIG. 34, it is assumed that the identifier of the controlling tag 720-1 is CCCC01, the identifier of the controlling tag 720-2 is CCCC02, the identifier of the controlling tag 720-3 is CCCC03, the identifier of the controlled tag 730-1 is DDDD01, the identifier of the controlled tag 730-2 is DDDD02, and the identifier of the controlled tag 730-3 is DDDD03.

For example, the identifier included in the pairing instruction is CCCC01, that is, the controlling tag 720-1 is the target controlling tag.

In response to the pairing instruction, the controlling tag 720-1 sends the first control signal to a controlled tag connected to the controlling tag 720-1. In FIG. 34, the controlling tag 720-1 is connected to the controlled tag 730-1, and the controlled tag 730-1 records the information indicating that the first control signal has been obtained.

The reader 710 broadcasts the read instruction to read identifiers of all controlling tags and identifiers of all controlled tags. When responding to the read instruction of the reader, the controlled tag sends information indicating whether the first control signal is obtained. The controlled tag connected to the target controlling tag sends the information indicating that the first control signal has been obtained, and another controlled tag sends information indicating that the first control signal is not obtained. In a possible implementation, with reference to FIG. 34, when the reader 710 broadcasts the read instruction, read responses of the controlling tag and the controlled tag are shown in Table 2.

**Table 2**

| |
|---|
| CCCC01 |
| CCCC02 |
| CCCC03 |
| 1DDDD01 |
| 0DDDD02 |
| 0DDDD03 |

CCCC01 is the identifier of the target controlling tag, and the identifier of the controlling tag is different from the identifier of the controlled tag. Therefore, the controlling tag and the controlled tag may be distinguished from each other based on the identifier.

In addition, a response of one controlled tag is 1DDDD01, where 1 is the information indicating that the first control signal has been obtained, and DDDD01 is an identifier of the controlled tag. None of responses of remaining controlled tags includes the information indicating that the first control signal has been obtained. For example, a response of one controlled tag is 0DDDD02, where 0 is the information indicating that the first control signal is not obtained, and DDDD02 is an identifier of the controlled tag. Therefore, the controlling tag represented by CCCC01 may be paired with the controlled tag represented by DDDD01. That is, the controlled tag 730-1 that has obtained the first control signal is paired with the target controlling tag 720-1.

Then, the reader may send a pairing instruction including an identifier of another controlling tag, perform pairing on the another controlling tag, and repeat the foregoing process until pairing and identification of all the controlling tags and controlled tags are completed.

In the foregoing example, a bit (which may be referred to as a status bit) is added when the controlled tag responds to the read instruction of the reader to indicate whether the controlled tag has obtained the first control signal. The bit being 1 indicates that the controlled tag has obtained the first control signal; and the bit being 0 indicates that the controlled tag does not obtain the first control signal. In some other possible implementations, the controlled tag may alternatively send, in another manner, the information indicating whether the controlled tag has obtained the first control signal.

Method or algorithm steps described in combination with the content disclosed in this application may be implemented by hardware, or may be implemented by a processor by executing software instructions. The software instructions may include corresponding software modules. The software modules may be stored in a random access memory (random access memory, RAM), a flash memory, an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A radio frequency identification system, wherein the radio frequency identification system comprises a reader, a controlling tag, and a controlled tag; the controlling tag is in a communication connection to the controlled tag;
the reader is configured to broadcast a pairing instruction, wherein the pairing instruction comprises an identifier of the controlling tag;
the controlling tag is configured to output, in response to matching between an identifier of the controlling tag and the identifier in the pairing instruction, a first control signal to the controlled tag that is in the communication connection to the controlling tag;
the reader is further configured to broadcast a read instruction;
the controlled tag is configured to send, to the reader in response to the read instruction, an identifier of the controlled tag and information indicating that the controlled tag has obtained the first control signal; and
the reader is further configured to determine a corresponding connection relationship between the controlled tag and the controlling tag based on the identifier of the controlling tag, the identifier of the controlled tag, and the information indicating that the controlled tag has obtained the first control signal.

2. The radio frequency identification system according to claim 1, wherein the controlling tag comprises a first tag chip, a first antenna, and a first connector;
the first tag chip comprises a first antenna end and a first signal end, the first antenna end is connected to the first antenna, the first signal end is connected to the first connector, and the first connector is configured to connect to the controlled tag; and
the first tag chip is configured to output the first control signal through the first signal end in response to the matching between the identifier of the controlling tag and the identifier in the pairing instruction.

3. The radio frequency identification system according to claim 1 or 2, wherein the controlled tag is configured to obtain the first control signal.

4. The radio frequency identification system according to claim 3, wherein the controlled tag comprises a second tag chip, a second antenna, and a second connector;
the second tag chip comprises a second antenna end and a second signal end, the second antenna end is connected to the second antenna, the second signal end is connected to the second connector, and the second connector is configured to connect to the controlling tag;
the second tag chip is configured to obtain the first control signal through the second signal end; and
the second tag chip is further configured to send, to the reader through the second antenna in response to the read instruction received by the second antenna, the identifier of the controlled tag and the information indicating that the controlled tag has obtained the first control signal.

5. The radio frequency identification system according to claim 3, wherein the controlled tag comprises a second tag chip, a second antenna, a switch circuit, and a second connector;
the second tag chip comprises a second antenna end, a second signal end, and a ground end, the second antenna end is connected to the second antenna, the switch circuit comprises a first end, a second end, and a control end, the first end of the switch circuit is connected to the second signal end, the second end of the switch circuit is connected to the ground end, the control end of the switch circuit is connected to the second connector, and the second connector is configured to connect to the controlling tag;
the switch circuit is configured to be conducted in response to a signal of the control end being the first control signal;
the second tag chip is configured to detect a conduction state of the switch circuit through the second signal end; and
the second tag chip is further configured to send, to the reader through the second antenna in response to the read instruction received by the second antenna, the identifier of the controlled tag and the information indicating that the controlled tag has obtained the first control signal.

6. A radio frequency identification method, wherein the method comprises:
sending, by a reader, a pairing instruction in a broadcast manner, wherein the pairing instruction comprises an identifier of a controlling tag;
outputting, by the controlling tag in response to matching between an identifier of the controlling tag and the identifier in the pairing instruction, a first control signal to a controlled tag that is in a communication connection to the controlling tag;
broadcasting, by the reader, a read instruction;
sending, by the controlled tag to the reader in response to the read instruction, an identifier of the controlled tag and information indicating that the controlled tag has obtained the first control signal; and
determining, by the reader, a corresponding connection relationship between the controlled tag and the controlling tag based on the identifier of the controlling tag, the identifier of the controlled tag, and the information indicating that the controlled tag has obtained the first control signal.

7. The radio frequency identification method according to claim 6, wherein before sending, by the controlled tag to the reader in response to the read instruction, the identifier of the controlled tag and the information indicating that the controlled tag has obtained the first control signal, the method further comprises: obtaining, by the controlled tag, the first control signal.

8. The radio frequency identification method according to claim 7, wherein obtaining, by the controlled tag, the first control signal comprises:
detecting, by a tag chip of the controlled tag, the first control signal; or
when a switch circuit of the controlled tag receives the first control signal, conducting the switch circuit of the controlled tag, and detecting, by a tag chip of the controlled tag, that the switch circuit is conducted.

9. A controlling tag, wherein the controlling tag comprises a first tag chip, a first antenna, and a first connector;
the first tag chip comprises a first antenna end and a first signal end, the first antenna end is connected to the first antenna, the first signal end is connected to the first connector, and the first connector is configured to connect to a controlled tag;
the first tag chip is configured to outputa first control signal through the first signal end in response to matching between an identifier of the controlling tag and an identifier in a pairing instruction; and
the first tag chip is further configured to stop, in response to mismatching between the identifier of the controlling tag and the identifier in the pairing instruction, outputting the first control signal.

10. A controlled tag, wherein the controlled tag comprises a second tag chip, a second antenna, and a second connector;
the second tag chip comprises a second antenna end and a second signal end, the second antenna end is connected to the second antenna, the second signal end is connected to the second connector, and the second connector is configured to connect to a controlling tag; and
the second tag chip is configured to send, to a reader through the second antenna in response to a read instruction received by the second antenna, an identifier of the controlled tag and information indicating that the controlled tag has obtained the first control signal.

11. The controlled tag according to claim 10, wherein the controlled tag is configured to obtain the first control signal.

12. The controlled tag according to claim 11, wherein the second tag chip is configured to obtain the first control signal through the second signal end.

13. The controlled tag according to claim 11, wherein the controlled tag further comprises a switch circuit, the switch circuit comprises a first end, a second end, and a control end, the first end of the switch circuit is connected to the second signal end, the second end of the switch circuit is connected toa ground end, and the control end of the switch circuit is connected to the second connector;
the switch circuit is configured to be conducted in response to a signal of the control end being the first control signal; and
the second tag chip is configured to detect a conduction state of the switch circuit through the second signal end.

14. A reader, wherein the reader is in a communication connection to a controlling tag and a controlled tag; the reader is configured to broadcast a pairing instruction, wherein the pairing instruction comprises an identifier of the controlling tag;
the reader is further configured to broadcast a read instruction;
the reader is further configured to receive an identifier of the controlled tag and information indicating that the controlled tag has obtained the first control signal that are sent by the controlled tag in response to the read instruction; and
the reader is further configured to determine a corresponding connection relationship between the controlled tag and the controlling tag based on the identifier of the controlling tag, the identifier of the controlled tag, and the information indicating that the controlled tag has obtained the first control signal.

15. A radio frequency identification system, wherein the radio frequency identification system comprises a reader, a controlling tag, and a controlled tag; the controlling tag is electrically connected to the controlled tag;
the reader is configured to broadcast a pairing instruction, wherein the pairing instruction comprises an identifier of a target controlling tag;
the controlling tag is configured to output, in response to matching between an identifier of the controlling tag and the identifier in the pairing instruction, a first control signal to the controlled tag connected to the controlling tag;
the controlled tag is configured to switch from a dormant state to a working state in response to the first control signal;
the reader is further configured to broadcast a read instruction;
the controlled tag is further configured to send an identifier of the controlled tag to the reader in response to the read instruction when the controlled tag is in the working state; and
the reader is further configured to determine a corresponding connection relationship between the controlled tag and the target controlling tag based on the identifier of the target controlling tag and the received identifier of the controlled tag.

16. The radio frequency identification system according to claim 15, wherein the controlling tag comprises a first tag chip, a first antenna, and a first connector;
the first tag chip comprises a first antenna end and an output end, the first antenna end is connected to the first antenna, the output end is connected to the first connector, and the first connector is configured to connect to the controlled tag; and
the first tag chip is configured to output the first control signal through the output end in response to the matching between the identifier of the controlling tag and the identifier in the pairing instruction.

17. The radio frequency identification system according to claim 15 or 16, wherein the controlled tag comprises a second tag chip, a second antenna, a switch circuit, and a second connector;
the second tag chip comprises a second antenna end, the switch circuit comprises a first end, a second end, and a control end, the first end of the switch circuit is connected to the second antenna end, the second end of the switch circuit is connected to the second antenna, the control end of the switch circuit is connected to the second connector, and the second connector is connected to the first connector of the controlling tag;
the switch circuit is configured to be conducted in response to a signal of the control end being the first control signal, and configure the controlled tag to be in the working state; and
the second tag chip is configured to send the identifier of the controlled tag to the reader through the second antenna in response to the read instruction when the controlled tag is in the working state.

18. A radio frequency identification method, wherein the method is applied to a radio frequency identification system, the radio frequency identification system comprises a reader, a controlling tag, and a controlled tag, the controlling tag is electrically connected to the controlled tag, and the method comprises:
sending, by the reader, a pairing instruction in a broadcast manner, wherein the pairing instruction comprises an identifier of a target controlling tag;
outputting, by the controlling tag in response to matching between an identifier of the controlling tag and the identifier in the pairing instruction, a first control signal to the controlled tag connected to the controlling tag;
switching, by the controlled tag, from a dormant state to a working state in response to the first control signal;
sending, by the reader, a read instruction in a broadcast manner;
sending, by the controlled tag, an identifier of the controlled tag to the reader in response to the read instruction when the controlled tag is in the working state; and
determining, by the reader, a corresponding connection relationship between the controlled tag and the target controlling tag based on the identifier of the target controlling tag and the received identifier of the controlled tag.

19. The radio frequency identification method according to claim 18, wherein the controlling tag comprises a first tag chip, a first antenna, and a first connector, the first tag chip comprises a first antenna end and an output end, the first antenna end is connected to the first antenna, the output end is connected to the first connector, and the first connector is configured to connect to the controlled tag; and outputting, by the controlling tag in response to the matching between the identifier in the pairing instruction and the identifier of the controlling tag, the first control signal to the controlled tag connected to the controlling tag comprises:
outputting, by the first tag chip, the first control signal through the output end in response to the matching between the identifier of the controlling tag and the identifier in the pairing instruction.

20. The radio frequency identification method according to claim 18 or 19, wherein the controlled tag comprises a second tag chip, a second antenna, a switch circuit, and a second connector, the second tag chip comprises a second antenna end, the switch circuit comprises a first end, a second end, and a control end, the first end of the switch circuit is connected to the second antenna end, the second end of the switch circuit is connected to the second antenna, the control end of the switch circuit is connected to the second connector, and the second connector is connected to the first connector of the controlling tag; and switching, by the controlled tag, from the dormant state to the working state in response to the first control signal comprises:
conducting the switch circuit in response to a signal of the control end being the first control signal, to enable the controlled tag to switch from the dormant state to the working state.

21. A controlling tag, wherein the controlling tag comprises a first tag chip, a first antenna, and a first connector;
the first tag chip comprises a first antenna end and an output end, the first antenna end is connected to the first antenna, the output end is connected to the first connector, and the first connector is configured to connect to a controlled tag;
the first tag chip is configured to output a first control signal through the output end in response to matching between an identifier of the controlling tag and an identifier in a pairing instruction; and
the first tag chip is further configured to stop, in response to mismatching between the identifier of the controlling tag and the identifier in the pairing instruction, outputting the first control signal.

22. A controlled tag, wherein the controlled tag comprises a second tag chip, a second antenna, a switch circuit, and a second connector;
the second tag chip comprises a second antenna end, and the switch circuit comprises a first end, a second end, and a control end;
the first end of the switch circuit is connected to the second antenna end, the second end of the switch circuit is connected to the second antenna, the control end of the switch circuit is connected to the second connector, and the second connector is configured to connect to a controlling tag;
the switch circuit is configured to be conducted in response to a signal of the control end being a first control signal, and configure the controlled tag to be in a working state; and
when the controlled tag is in the working state, the second tag chip is configured to send an identifier of the controlled tag to a reader through the second antenna in response to a read instruction sent by the reader.

23. A reader, wherein the reader is in a communication connection to a controlling tag and a controlled tag; the reader is configured to broadcast a pairing instruction, wherein the pairing instruction comprises an identifier of a target controlling tag;
the reader is further configured to broadcast a read instruction;
the reader is further configured to receive an identifier of the controlled tag that is sent by the controlled tag in response to the read instruction when the controlled tag is in a working state; and
the reader is further configured to determine a corresponding connection relationship between the controlled tag and the target controlling tag based on the identifier of the target controlling tag and the received identifier of the controlled tag.

24. A radio frequency identification system, wherein the radio frequency identification system comprises a reader and a plurality of tags, and a first tag and a second tag in the plurality of tags are connected;
the reader is configured to send a read instruction;
the first tag is configured to send a first working identifier to the reader in response to the read instruction, wherein the first working identifier comprises a first identifier and a second identifier, the first identifier is an identifier of the first tag, and the second identifier is an identifier of a tag connected to the first tag;
the second tag is configured to send a second working identifier to the reader in response to the read instruction, wherein the second working identifier comprises a third identifier, and the third identifier is an identifier of the second tag; and
the reader is configured to determine a corresponding connection relationship between the first tag and the second tag when the second identifier matches the third identifier.

25. The radio frequency identification system according to claim 24, wherein the first tag comprises a first tag chip, an antenna, and a connector, the first tag chip comprises an antenna end and a data end, the antenna end is connected to the antenna, and the data end is connected to the connector;
the second tag comprises a second tag chip, an antenna, and a connector, the second tag chip comprises an antenna end and a data end, the antenna end is connected to the antenna, and the data end is connected to the connector;
the connector of the first tag is connected to the connector of the second tag;
the first tag is configured to obtain the identifier of the second tag through the data end of the first tag chip; and
the second tag is configured to obtain the identifier of the first tag through the data end of the second tag chip.

26. The radio frequency identification system according to claim 25, wherein the first tag is further configured to generate the first working identifier based on the identifier of the first tag and the identifier of the second tag;
the second working identifier further comprises a fourth identifier, and the fourth identifier is an identifier of a tag connected to the second tag; and
the second tag is further configured to generate the second working identifier based on the identifier of the second tag and the identifier of the first tag.

27. The radio frequency identification system according to claim 24, wherein the tag comprises a tag chip, an antenna, a first connector, and a second connector, the tag chip comprises an antenna end, a first data end, and a second data end, the antenna end is connected to the antenna, the first data end is connected to the first connector, and the second data end is connected to the second connector;
the tag chip is configured to send, through the first data end, an identifier of the tag to a tag connected to the first connector; and
the tag chip is further configured to obtain, through the second data end, an identifier of a tag connected to the second connector.

28. The radio frequency identification system according to claim 27, wherein the plurality of tags further comprise a third tag, a second connector of the first tag is connected to the first connector of the second tag, and the second connector of the second tag is connected to the first connector of the third tag;
the first working identifier comprises the first identifier and the second identifier, the first identifier is the identifier of the first tag, and the second identifier is an identifier of a tag connected to the second connector of the first tag;
the first tag is further configured to generate the first working identifier based on the identifier of the first tag and the identifier of the second tag;
the second working identifier comprises a third identifier and a fourth identifier, the third identifier is an identifier of the third tag, and the fourth identifier is an identifier of a tag connected to the second connector of the second tag; and
the second tag is further configured to generate the second working identifier based on the identifier of the second tag and the identifier of the third tag.

29. A radio frequency identification method, wherein the radio frequency identification method is applied to the radio frequency identification system according to any one of claims 24 to 28, and the method comprises:
sending, by a reader, a read instruction;
sending, by a first tag, a first working identifier to the reader, wherein the first working identifier comprises a first identifier and a second identifier, the first identifier is an identifier of the first tag, and the second identifier is an identifier of a tag connected to the first tag;
sending, by a second tag, a second working identifier to the reader, wherein the second working identifier comprises a third identifier, and the third identifier is an identifier of the second tag; and
determining, by the reader, a corresponding connection relationship between the first tag and the second tag when the second identifier matches the third identifier.

30. A tag, wherein the tag comprises a tag chip, an antenna, and a connector, the tag chip comprises an antenna end and a data end, the antenna end is connected to the antenna, and the data end is connected to the connector;
the tag is configured to obtain, through the data end of the tag chip, an identifier of a tag connected to the connector; and
the tag is further configured to send a working identifier to a reader in response to a read instruction of the reader, wherein the working identifier comprises an identifier of the tag and the identifier of the tag connected to the connector of the tag.

31. A tag, wherein the tag comprises a tag chip, an antenna, a first connector, and a second connector, the tag chip comprises an antenna end, a first data end, and a second data end, the antenna end is connected to the antenna, the first data end is connected to the first connector, and the second data end is connected to the second connector;
the tag chip is configured to send, through the first data end, an identifier of the tag to a tag connected to the first connector;
the tag chip is further configured to obtain, through the second data end, an identifier of a tag connected to the second connector; and
the tag is further configured to send a working identifier to a reader in response to a read instruction of the reader, wherein the working identifier comprises the identifier of the tag and the identifier of the tag connected to the second connector of the tag.

32. A reader, wherein the reader is connected to a plurality of tags, and a first tag and a second tag in the plurality of tags are connected;
the reader is configured to send a read instruction;
the reader is further configured to receive a first working identifier sent by the first tag, wherein the first working identifier comprises a first identifier and a second identifier, the first identifier is an identifier of the first tag, and the second identifier is an identifier of a tag connected to the first tag;
the reader is further configured to receive a second working identifier sent by the second tag, wherein the second working identifier comprises a third identifier, and the third identifier is an identifier of the second tag; and
the reader is further configured to determine a corresponding connection relationship between the first tag and the second tag when the second identifier matches the third identifier.

33. An optical distribution frame, wherein the optical distribution frame comprises a plurality of optical fiber ports, and the controlling tag according to claim 9 or claim 21 or the tag according to either of claims 30 and 31 is disposed on the optical fiber port.
